Europäisches Patentamt

European Patent Office

Office européen des brevets

(11) Veröffentlichungsnummer: **0 181 554**
**B1**

# EUROPÄISCHE PATENTSCHRIFT

(45) Veröffentlichungstag der Patentschrift:
09.03.88

(51) Int. Cl.⁴: **G 03 B 17/34, B 65 H 3/30**

(21) Anmeldenummer: **85113671.3**

(22) Anmeldetag: **28.10.85**

(54) **Einrichtung zum Handhaben von lichtempfindlichem photographischem Blattmaterial bei Umgebungslicht.**

(30) Priorität: **03.11.84 CH 5262/84**

(43) Veröffentlichungstag der Anmeldung:
**21.05.86 Patentblatt 86/21**

(45) Bekanntmachung des Hinweises auf die Patenterteilung:
**09.03.88 Patentblatt 88/10**

(84) Benannte Vertragsstaaten:
**CH DE FR GB IT LI**

(56) Entgegenhaltungen:
**DE - A - 3 416 064**
**DE - C - 235 285**
**DE - C - 283 578**
**DE - C - 526 237**

(73) Patentinhaber: **Sinar AG Schaffhausen,**
**CH-8245 Feuerthalen (CH)**

(72) Erfinder: **Koch, Carl, Im Santenbühl 82, CH-8211 Stetten**
**(CH)**

(74) Vertreter: **Scheidegger, Zwicky, Werner & Co.,**
**Stampfenbachstrasse 48 Postfach, CH-8023 Zürich (CH)**

ACTORUM AG

## Beschreibung

Die vorliegende Erfindung betrifft eine Einrichtung, die das Handhaben von lichtempfindlichem photographischem Blattmaterial bei Umgebungslicht erlaubt, ohne dass ein unerwünschter Lichteinfall auf die lichtempfindlichen Schichten des Blattmaterials zu befürchten ist. Unter dem Ausdruck „photographisches Blattmaterial" werden mit einer lichtempfindlichen Schicht versehene Einzelblätter, z.B. Negativ- oder Positiv-Filmblätter oder Kopierpapierblätter verstanden. Der Begriff „Handhaben" bezieht sich insbesondere auf das Einlegen von unbelichteten photographischen Blättern in Kassetten, die zum Anbringen an der Rückseite von photographischen Universal- oder Fachkameras bestimmt sind, auf das Entnehmen belichteter photographischer Blätter aus den genannten Kassetten sowie auf das Zuführen belichteter photographischer Blätter zu Entwicklungsvorrichtungen.

Es versteht sich von selbst, dass das Handhaben von noch nicht entwickelten photographischen Blättern zur Vermeidung von störendem Lichteinfall unter vollständigem Lichtabschluss zu geschehen hat. Dies erfolgte bisher meistens manuell in einer Dunkelkammer, wobei Fehlmanipulationen nicht ausgeschlossen waren. Zum Vermeiden dieser zeitraubenden und fehleranfälligen Arbeitsweise in einer Dunkelkammer sind schon Einrichtungen bekannt geworden (cf. DE-C-283578), die gestatten, einen Teil der geschilderten Handhabung bei Umgebungslicht auszuführen. Insbesondere sind Einrichtungen bekannt, mit denen es möglich ist, bei Tageslicht aus einem lichtdicht verpackten Stapel unbelichteter photographischer Blätter jeweils ein einzelnes Blatt zu entnehmen und in eine Kassette einzulegen. Andere Arbeitsgänge sind mit diesen bekannten Einrichtungen nicht möglich.

Der vorliegenden Erfindung liegt die Aufgabe zugrunde, eine Einrichtung zum Handhaben von lichtempfindlichem photographischem Blattmaterial bei Umgebungslicht derart auszugestalten, dass sie bei kompakter Bauweise universeller verwendbar und betriebssicherer ist als bekannte Einrichtungen für denselben Zweck. Weitere Ziele der Erfindung ergeben sich aus der detaillierten Beschreibung von Ausführungsbeispielen.

Die Erfindung geht aus von einer Einrichtung mit einer Separiervorrichtung zum Trennen jeweils eines einzelnen Blattes von einem Stapel aus mehreren Blättern gleicher Form und Grösse und zum Übergeben des abgetrennten Blattes in eine zum Anbringen an einer photographischen Kamera bestimmte Kassette oder in einen Beschickungseinlass einer photographischen Entwicklungsvorrichtung, wobei die Separiervorrichtung einer Eintrittsöffnung für die Zulieferung von Blattmaterial und eine Ausgabeöffnung für die Ausgabe jeweils eines einzelnen Blattes aufweist und mit einem zwischen der Eintrittsöffnung und der Austrittsöffnung angeordneten beweglichen Vereinzelungsorgan sowie mit Verbindungsmitteln versehen ist, welche erlauben, die Ausgabeöffnung der Separiervorrichtung mit der Kassette oder mit einem Anschlussstück am Beschickungseinlass der Entwicklungsvorrichtung lösbar und gegen Umgebungslicht abgeschirmt zu verbinden.

Eine solche Einrichtung ist nun erfindungsgemäss zur Hauptsache dadurch gekennzeichnet, dass die Separiervorrichtung zwischen ihrer Eintrittsöffnung und dem Vereinzelungsorgan einen Stauraum für einen Stapel des Blattmaterials aufweist, dass die Eintrittsöffnung der Separiervorrichtung mit einem Verschlussorgan versehen ist, dass in eine die Eintrittsöffnung lichtdicht verschliessende Schliesslage und in eine die Eintrittsöffnung gänzlich freigebende Offenlage bewegbar ist, dass bei dem Vereinzelungsorgan der Separiervorrichtung Auflageflächen zum Abstützen der Randpartien des jeweils untersten Blattes des Stapels vorhanden sind, dass die Separiervorrichtung in den Stauraum hineinragende Niederhalteorgane zum Andrücken des Stapels an die Auflageschultern aufweist, dass jedes der Niederhalteorgane aus seiner Andrückstellung in eine unwirksame Stellung bewegbar ist, bei welcher es sich ausserhalb des Stauraumes befindet, um das Einbringen des Stapels in den Stauraum zu ermöglichen, und dass zum Bewegen der Niederhalteorgane in ihre Andrückstellung bzw. in ihre unwirksame Stellung Antriebsvorrichtungen vorhanden sind, die durch das der Eintrittsöffnung der Separiervorrichtung zugeordnete Verschlussorgan steuerbar sind, derart dass die Niederhalteorgane jeweils beim Bewegen des Verschlussorgans in seine Offenstellung selbsttätig ihre unwirksame Stellung und beim Bewegen des Verschlussorgans in seine Schliesslage selbsttätig ihre Andrückstellung einnehmen.

Weitere Merkmale von vorteilhaften Ausgestaltungen und Weiterbildungen des Erfindungsgegenstandes ergeben sich aus den abhängigen Patentansprüchen, aus der nun folgenden Beschreibung von Ausführungsbeispielen und aus den zugehörigen Zeichnungen, in denen einige Realisationsmöglichkeiten der Erfindung rein beispielsweise veranschaulicht sind.

Fig. 1 stellt eine Draufsicht auf ein erstes Ausführungsbeispiel einer Einrichtung zum Laden von Kassetten für eine photographische Fachkamera mit unbelichteten Filmblättern dar;

Fig. 2 zeigt die gleiche Einrichtung in einer Seitenansicht gemäss Pfeil 2 in Fig. 1;

Fig. 3 zeigt in grösserem Massstab einen vertikalen Querschnitt nach der Linie 3-3 in Fig. 2;

Fig. 4 stellt ebenfalls in grösserem Massstab einen vertikalen Längsschnitt nach der Linie 4-4 in Fig. 1 dar;

Fig. 5 bis 7 zeigen drei Etagen der Einrichtung in voneinander getrenntem Zustand, jeweils im vertikalen Längsschnitt nach der Linie 5-5 in Fig. 8 bzw. nach der Linie 6-6 in Fig. 10 bzw. nach der Linie 7-7 in Fig. 24;

Fig. 8 zeigt einen horizontalen Schnitt nach der Linie 8-8 in Fig. 5;

Fig. 9 ist eine Unteransicht des in der Etage gemäss den Fig. 5 und 8 eingesetzten Containers für die Aufnahme eines Stapels von photographischem Blattmaterial;

Fig. 10 zeigt die Etage gemäss Fig. 6 teils in Draufsicht und teils im horizontalen Schnitt nach der Linie 10-10 in Fig. 6;

Fig. 11 veranschaulicht eine Einzelheit von Fig. 10 bei teilweise geöffnetem Lichtschutzschieber;

Fig. 12 bis 14 zeigen eine andere Einzelheit von Fig. 10 bei verschiedenen Stellungen des Lichtschutzschiebers;

Fig. 15 ist ein vertikaler Längsschnitt nach der Linie 15-15 in Fig. 10;

Fig. 16 zeigt in grösserem Massstab einen vertikalen Teilschnitt nach der Linie 16-16 in Fig. 10;

Fig. 17 veranschaulicht ebenfalls in grösserem Massstab einen vertikalen Teilschnitt nach der Linie 17-17 in Fig. 10;

Fig. 18 ist ein horizontaler Schnitt nach der Linie 18-18 in Fig. 17;

Fig. 19 und 20 zeigen schematisch je einen horizontalen Teilschnitt nach der Linie 19-19 in Fig. 17 bei verschiedenen Stellungen eines Lichtschutzschiebers;

Fig. 21 ist eine Draufsicht auf die in Fig. 7 dargestellte Etage der Einrichtung;

Fig. 22 und 23 sind zu Fig. 21 analoge Darstellungen der betreffenden Etage bei verschiedenen Stellungen von beweglichen Bauteilen;

Fig. 24 zeigt einen horizontalen Schnitt nach der Linie 24-24 in Fig. 7;

Fig. 25 stellt einen vertikalen Teilschnitt nach der Linie 25-25 in Fig. 21 in grösserem Massstab dar;

Fig. 26 ist ein Horizontalschnitt nach der Linie 26-26 in Fig. 25;

Fig. 27 bis 32 sind den Fig. 25 und 26 analoge Darstellungen bei verschiedenen Stellungen von beweglichen Bauteilen;

Fig. 33 zeigt einen vertikalen Teilschnitt nach der Linie 33-33 in Fig. 10;

Fig. 34 zeigt eine Seitenansicht einer Einrichtung zum Entladen einer Kassette und zum Überführen des der Kassette entnommenen belichteten Filmblattes in einen Container, in welchem mehrere belichtete Filmblätter stapelbar sind;

Fig. 35 ist eine Ansicht der gleichen Einrichtung in Richtung des Pfeiles 35 in Fig. 34 gesehen;

Fig. 36 stellt einen Längsschnitt nach der Linie 36-36 in Fig. 35 dar;

Fig. 37 ist eine Draufsicht auf die den Container enthaltende untere Etage der aus zwei Etagen gebildeten Einrichtung nach den Fig. 34 bis 36;

Fig. 38 zeigt einen der Fig. 4 analogen Längsschnitt durch ein Ausführungsbeispiel der Einrichtung, welches dazu geeignet ist, die in einem Container gestapelten belichteten Filmblätter einzeln nacheinander in den Beschickungseinlass einer photographischen Entwicklungsvorrichtung zu übergeben;

Fig. 39 stellt einen der Fig. 36 analogen Längsschnitt durch eine Einrichtung dar, die ermöglicht, ein belichtetes Filmblatt aus einer Kassette unmittelbar in den Beschickungseinlass einer photographischen Entwicklungsvorrichtung zu übergeben;

Fig. 40 veranschaulicht ein Ausführungsbeispiel einer Einrichtung, die sowohl zum Laden von Kassetten mit unbelichtetem photographischem Blattmaterial als auch zum Entladen der Kassetten und zum Übergeben der den Kassetten entnommenen belichteten Filmblätter in einen Container zum Stapeln dieser Filmblätter eingerichtet ist;

Fig. 41 zeigt eine Vorderansicht eines weiteren Ausführungsbeispiels einer Einrichtung zum Laden von Filmkassetten für eine photographische Fachkamera, wobei Mittel zum Anzeigen des Typs des jeweils benutzten Filmmaterials vorhanden sind;

Fig. 42 ist eine Teilansicht der Einrichtung gemäss Fig. 41 von unten gesehen.

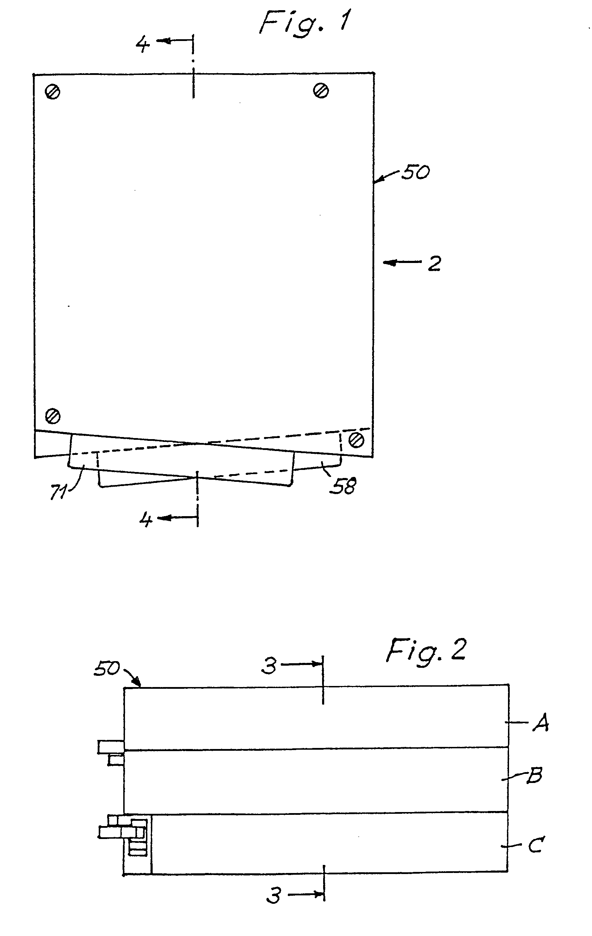

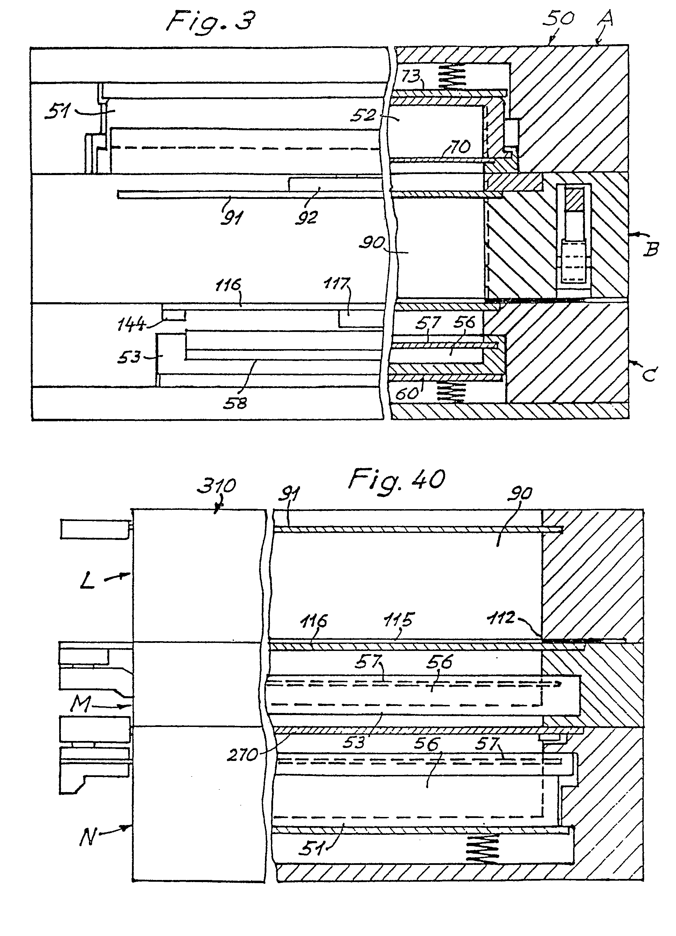

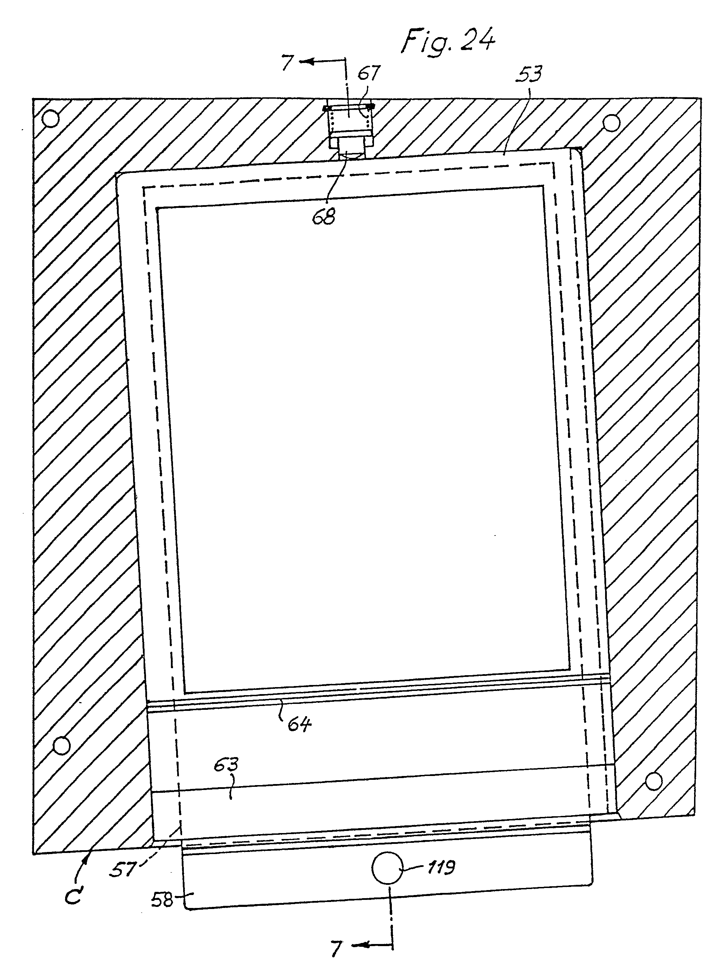

Die in den Fig. 1 bis 33 veranschaulichte Ausführungsform der erfindungsgemässen Einrichtung zum Handhaben von lichtempfindlichem photographischem Blattmaterial bei Umgebungslicht weist ein aus drei sandwichartig übereinander angeordneten Etagen A, B und C gebildetes Gehäuse 50 auf. Die oberste Etage A ist zur Aufnahme eines Containers 51 (Fig. 3, 4, 5, 8, 9) bestimmt, der eine Ausnehmung 52 zur Aufnahme eines (nicht gezeigten) Stapels aus Einzelblättern des photographischen Blattmaterials aufweist. Die unterste Etage C ist zur Aufnahme einer Kassette 53 eingerichtet, die wie eine übliche Negativkassette zum Anbringen an der Rückseite einer photographischen Universal- oder Fachkamera ausgebildet sein kann. Der Container 51 und die Kassette 53 sind je nach Art einer Schublade in das Gehäuse 50 einschiebbar. Zwischen dem Container 51 und der Kassette 53 befindet sich eine Separiervorrichtung 55, die später näher erläutert wird und dazu dient, jeweils ein einzelnes Blatt von dem erwähnten Stapel des photographischen Blattmaterials abzutrennen und in die Kassette 53 abzugeben.

Die Kassette 53 weist eine zur Aufnahme eines einzelnen Blattes bestimmte Ausnehmung 56 auf, deren Grundfläche nach Form und Grösse an die Flächenabmessungen des Blattes angepasst ist. Die offene Mündung oder Durchlassöffnung der Ausnehmung 56 ist in üblicher Weise mit einem Lichtschutzschieber 57 versehen, der in eine die Mündung der Ausnehmung 56 lichtdicht verschliessende Schliesslage und in eine die Mündung gänzlich freigebende Offenlage bewegbar ist. Die aus der Kassette 53 stets herausragende Endpartie des Lichtschutzschiebers 57 weist eine Griffleiste 58 auf, welche das manuelle Betätigen des Lichtschutzschiebers erleichtert. In der untersten Etage C des Gehäuses 50 befindet sich eine unter dem Einfluss von Federn 59 stehende Andrückplatte 60, durch welche die in die Etage C eingeschobene Kassette 53 aufwärts gegen Anschlagschultern 61 und 62 gedrückt wird, wobei vorspringende Querrippen 63 und 64 der Kassette 53 mit entsprechenden Nuten in der Anschlagschulter 61 in Eingriff gelangen. In der rückseitigen Wandpartie 65 der Etage C befindet sich eine Ausnehmung 66, in welcher ein unter dem Einfluss einer Druckfeder 67 stehender Puffer 68 verschiebbar gelagert ist, gegen den das innere Ende der Kassette 53 anliegt. Die Feder 67 und der Puffer 68 haben das Bestreben, die Kassette 53 ein wenig aus der Etage C hinauszuschieben. Dies ist jedoch so lange verhindert, als die Rippen 63 und 64 mit den entsprechenden Nuten der Anschlagschulter 61 in Eingriff sind.

Die Ausnehmung 52 des Containers 51 in der Etage A des Gehäuses 50 weist einen nach Form und Grösse an die Flächenabmessungen der einzelnen Blätter des Blattmaterialstapels angepassten Grundriss auf. Die offene Mündung oder Durchlassöffnung der Ausnehmung 52 ist wie bei der Kassette 53 mit einem Lichtschutzschieber 70 versehen, dessen aus dem Container stets herausragendes Ende eine Griffleiste 71 trägt, welche das manuelle Betätigen des Lichtschutzschiebers erleichtert. In der Etage A befindet sich eine Andrückplatte 73, die unter dem Einfluss von Federn 74 steht und bestrebt ist, den Container 51 abwärts gegen Anschlagschultern 75 und 76 an der Etage B des Gehäuses 50 zu drücken. Der Container 51 weist Quernuten 77 auf, in welche entsprechende Rippen 78 der Etage B eingreifen, wenn der Container 51 in das Gehäuse 50 eingesetzt ist und durch die Andrückplatte 73 und die Federn 74 gegen unten gedrückt wird. In der rückwärtigen Wandpartie der Etage A ist ein unter dem Einfluss einer Druckfeder 79 stehender Puffer 80 verschiebbar gelagert, der das Bestreben hat, den Container 51 ein wenig aus der Etage A hinauszuschieben. Dies ist jedoch so lange verhindert, als die Rippen 78 mit entsprechenden Nuten 77 des Containers in Eingriff sind.

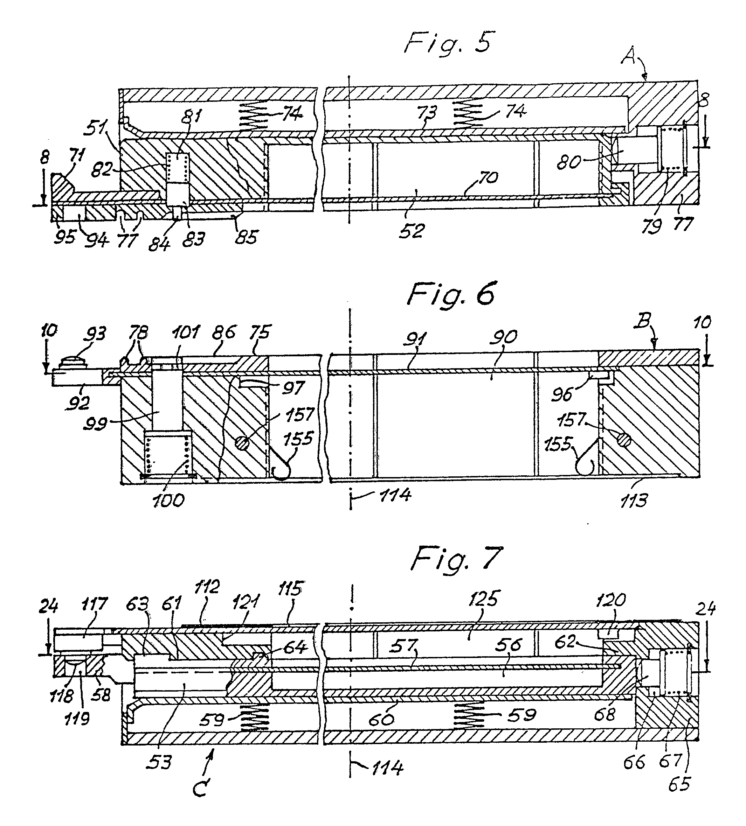

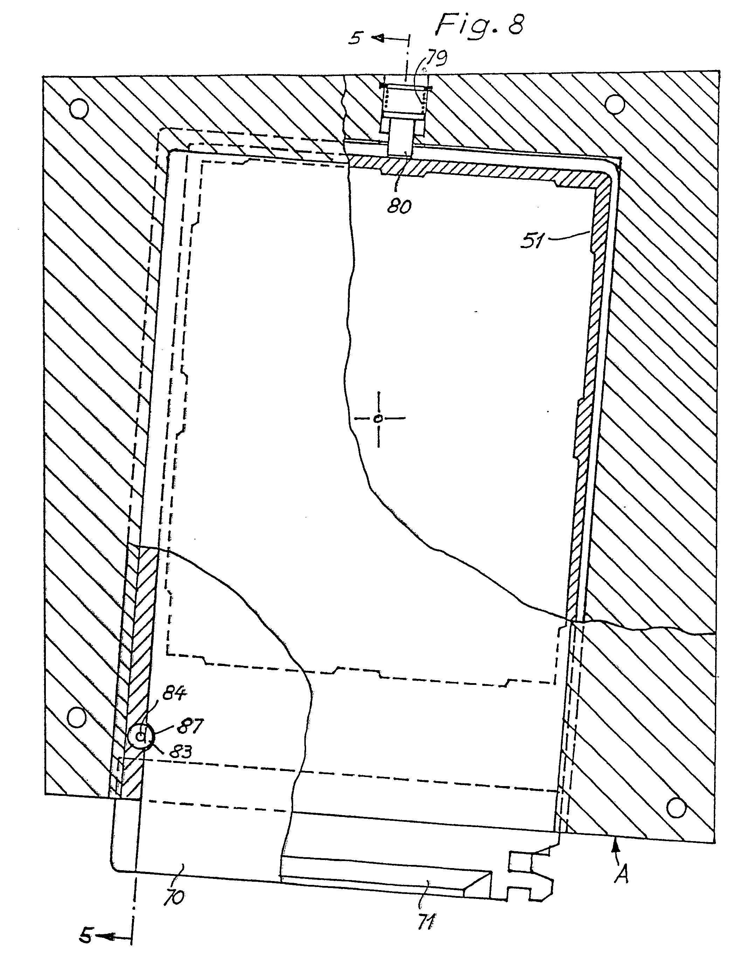

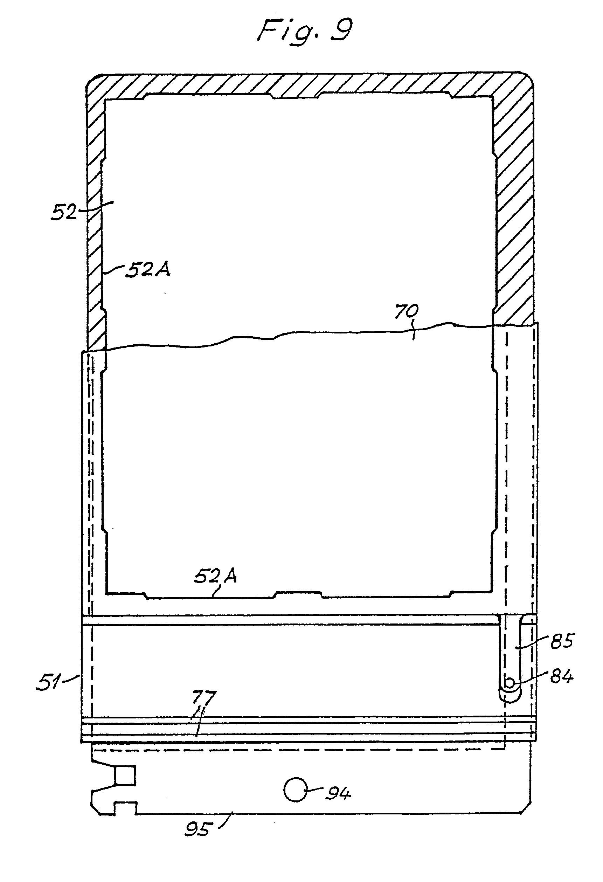

Gemäss den Fig. 5 und 8 weist der Container 51 ausserhalb der Ausnehmung 52 eine Bohrung 81 auf, in welche eine Druckfeder 82 und ein Kolben 83 mit einer verjüngten, zapfenförmigen Endpartie 84 eingesetzt sind. Die Feder 82 ist bestrebt, den Kolben 83 in Fig. 5 nach unten zu schieben, so dass die zapfenförmige Endpartie 84 in eine Längsrinne 85 hineinragt und von aussen her zugänglich ist (Fig. 5 und 9). An der Oberseite der Etage B befindet sich eine Rippe 86, die mit der Längsrinne 85 des Containers 51 in Eingriff gelangt, wenn der Container in die Etage A des Gehäuses 50 eingesetzt wird. Dabei wird die zapfenförmige Endpartie 84 durch die Rippe 86 nach oben gedrückt und dadurch der Kolben 83 entgegen dem Einfluss der Feder 82 ein Stück weit aufwärts bewegt. Der Kolben 83 dient als Riegelorgan zum Sperren des Lichtschutzschiebers 70 in seiner Schliesslage, solange der Container 51 nicht korrekt in das Gehäuse 50 eingesetzt ist. Zu diesem Zweck weist der Lichtschutzschieber 70 gemäss Fig. 8 an einer seiner Längskanten eine kreissegmentförmige Kerbe 87 auf, und der Kolben 83 ist derart angeordnet, dass er in die Kerbe 87 teilweise eingreift und dadurch den Lichtschutzschieber 70 sperrt, wenn der Kolben 83 nicht mittels der zapfenförmigen Endpartie 84 in Fig. 5 nach oben geschoben ist. Ist jedoch der Container 51 korrekt in das Gehäuse 50 eingesetzt, so drückt die Rippe 86 der Etage B mittels der zapfenförmigen Endpartie 84 den Kolben 83 so weit nach oben, dass er sich dann oberhalb des Lichtschutzschiebers 70 befindet und ausser Eingriff mit der Kerbe 87 ist. Da die zapfenförmige Endpartie 84 ausserhalb der Bewegungsbahn des Lichtschutzschiebers 70 plaziert ist, wie man in Fig. 8 sieht, behindert die Endpartie 84 die Betätigung des Lichtschutzschiebers in keiner Weise.

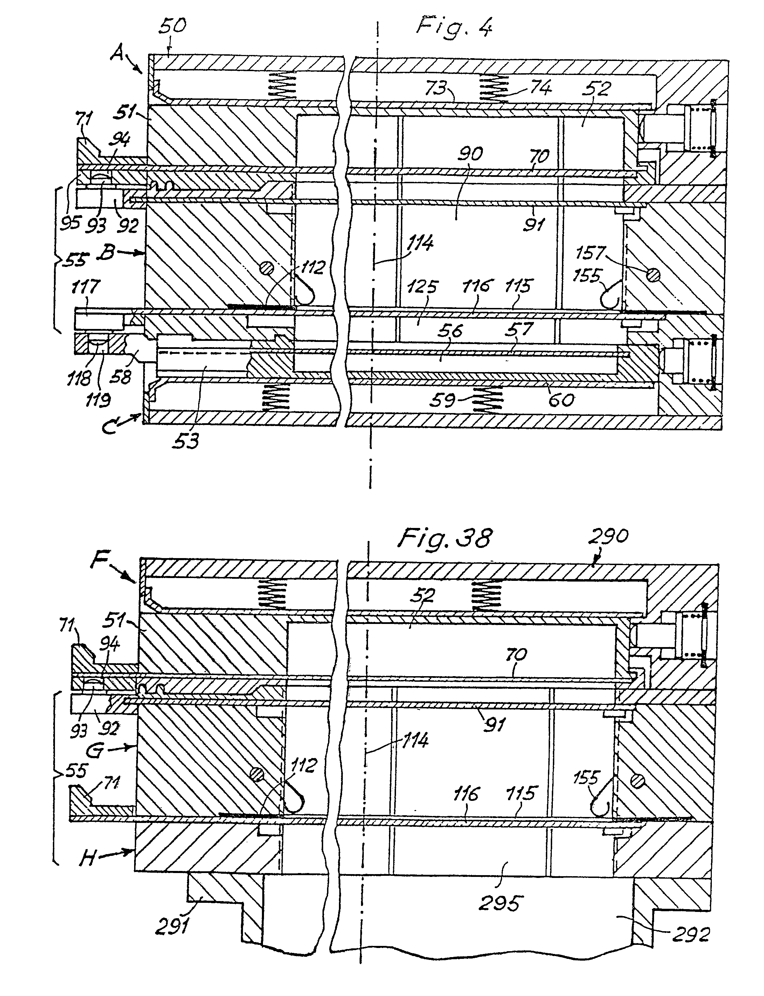

Die mittlere Etage B des Gehäuses 55 weist eine durchgehende Ausnehmung 90 auf, deren Querschnitt in der Durchtrittsrichtung betrachtet nach Form und Grösse an die Flächenabmessungen eines einzelnen Blattes des photographischen Blattmaterials angepasst ist. Wenn die Etagen A und B gemäss Fig. 4 zusammengefügt sind und der Container 51 korrekt in das Gehäuse 50 eingesetzt ist, fluchten die vertikalen Begrenzungsflächen der Ausnehmung 52 des Containers und der Ausnehmung 90 der Etage B, so dass dann die genannten Ausnehmungen 52 und 90 stufenlos aneinander anschliessen. Die Ausnehmung 90 dient als Stauraum der Separiervorrichtung 55 (Fig. 4), in welchem Stauraum ein mindestens ebenso grosser Stapel von Blattmaterial wie in der Ausnehmung 52 des Containers 51 Platz findet. Die obere Mündung oder Eintrittsöffnung der Ausnehmung 90 ist mit einem Lichtschutzschieber 91 versehen, der wie die bereits erwähnten Lichtschutzschieber 57 und 70 in eine Schliesslage und eine Offenlage bewegbar ist. Das aus dem Gehäuse 50 herausragende Ende des Lichtschutzschiebers 90 ist mit einem Handgriff 92 versehen, der einen nach oben ragenden Kupplungszapfen 93 aufweist. Wie man in Fig. 4 sieht, lässt sich der Kupplungszapfen 93 mit einer entsprechenden Bohrung 94 eines am Lichtschutzschieber 70 des Containers 51 angeordneten Kupplungsstückes 95 in Kupplungseingriff bringen, wenn der Container in das Gehäuse 50 eingesetzt wird, so dass nachher die beiden Lichtschutzschieber 70 und 91 zwangsläufig jeweils zusammen gleichzeitig und gleichsinnig zu betätigen sind. Um ein vollständiges Herausziehen des Lichtschutzschiebers 91 aus dem Gehäuse 50 zu verhindern, ist an dem vom Handgriff 92 abgewandten Ende des Lichtschutzschiebers 91 ein Anschlagnocken 96 befestigt, der bei korrekter Offenstellung des Lichtschutzschiebers gegen eine stationäre Anschlagfläche 97 anliegt.

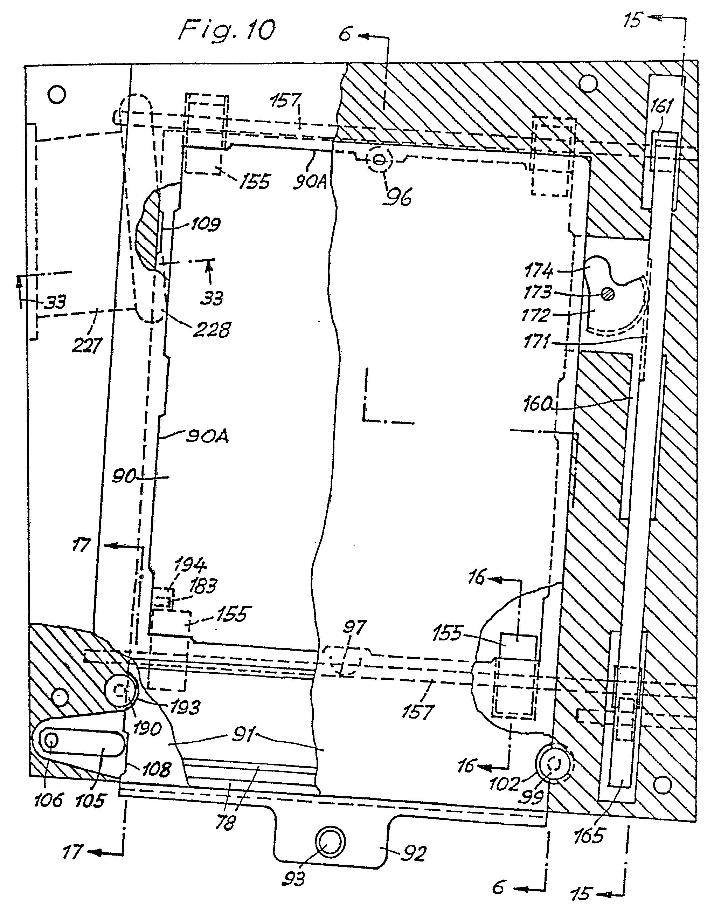

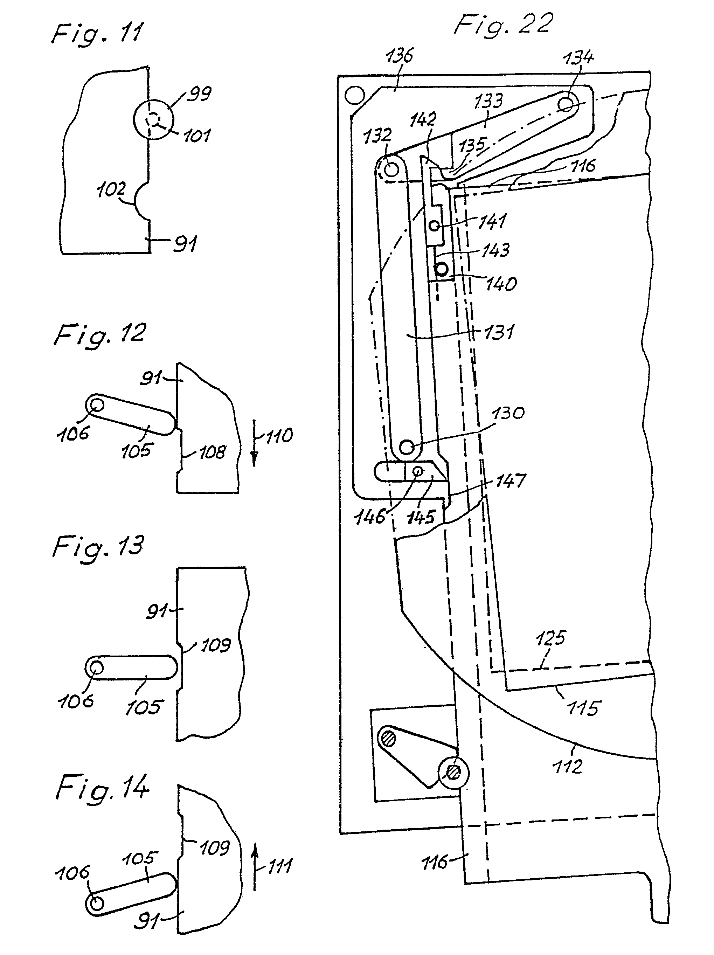

In den Fig. 6 und 10 ist ersichtlich, dass die Etage B des Gehäuses 50 ausserhalb der Ausnehmung 90 eine Bohrung 98 aufweist, in der sich ein Kolben 99 und eine zugeordnete Druckfeder 100 befinden. Die Feder 100 ist bestrebt, den Kolben 99 in Fig. 6 nach oben zu schieben. Nahe bei dem oberen Ende des Kolbens 99 ist dieser mit einer Umfangsrille 101 versehen. Der Kolben 99 dient als Riegelorgan zum Sperren des Lichtschutzschiebers 91 in seiner Schliesslage, solange der Container 51 nicht korrekt in das Gehäuse 50 eingesetzt ist. Zu diesem Zweck weist der Lichtschutzschieber 91 gemäss Fig. 10 an einer seiner Längskanten eine kreissegmentförmige Kerbe 102 auf, und der Kolben 99 ist derart angeordnet, dass er in die genannte Kerbe 102 teilweise eingreift und dadurch den Lichtschutzschieber 91 sperrt, wenn der Kolben 99 unter dem Einfluss der Feder 100 so weit nach oben bewegt ist, dass die Umfangsrille 101 oberhalb des Lichtschutzschiebers liegt. Das obere Ende des Kolbens 99 liegt frei und wird durch den in das Gehäuse 50 korrekt eingesetzten Container 51 entgegen dem Einfluss der Feder 100 so weit nach unten gedrückt, dass die Umfangsrille 101 des Kolbens 99 genau auf die Höhe des Lichtschutzschiebers 91 zu liegen kommt. Demzufolge kann dann der Lichtschutzschieber 91 betätigt werden, weil seine mit der Kerbe 102 versehene Längskante durch die Umfangsrille 101 des Kolbens 99 hindurchlaufen kann, wie in Fig. 11 schematisch gezeigt ist.

Dem Lichtschutzschieber 91 ist gemäss Fig. 10 ferner ein Rückschubsperrorgan 105 zugeordnet, dass die Gestalt eines kleinen Schwenkarmes hat, der um eine stationäre Achse 106 schwenkbar ist und unter dem Einfluss einer (nicht gezeigten) Feder steht, die bestrebt ist, den Schwenkarm 105 in der dargestellten Mittelstellung zu halten. An einer Längskante des Lichtschutzschiebers 91 befinden sich zwei Einkerbungen 108 und 109, in welche das freie Ende des Schwenkarmes 105 bei ganz geschlossenem bzw. bei ganz geöffnetem Lichtschutzschieber eingreifen kann, wobei der Schwenkarm 105 jeweils seine Mittelstellung einnimmt. Wird der Lichtschutzschieber 91 aus seiner Schliesslage gegen die Offenlage hin bewegt, so wird der Schwenkarm 105 durch die benachbarte Längskante des Lichtschutzschiebers in eine verschwenkte Lage gemäss Fig. 12 gedränkt, in welcher der Schwenkarm 105 durch Gesperrewirkung ein Zurückschieben des Lichtschutzschiebers entgegen dem Pfeil 110 verhindert. Sobald jedoch der Lichtschutzschieber 91 seine Offenlage erreicht, gelangt die zweite Einkerbung 109 in den Bereich des Schwenkarmes 105 und erlaubt demselben, in seine Mittelstellung zurückzuschwenken, wie in Fig. 13 gezeigt ist. Wenn man nachher den Lichtschutzschieber 91 aus seiner Offenlage gegen die Schliesslage bewegt, gemäss dem Pfeil 111 in Fig. 14, wird der Schwenkarm 105 durch die Längskante des Lichtschutzschiebers in eine gegenüber vorher entgegengesetzte Schwenklage gedrängt, wie Fig. 14 zeigt, wonach dann der Schwenkarm durch Gesperrewirkung ein Zurückschieben des Lichtschutzschiebers entgegen dem Pfeil 111 verhindert. Erst wenn der Lichtschutzschieber 91 wieder in seine Schliesslage einläuft, erlaubt die Einkerbung 108 dem Schwenkarm 105, in seine Mittelstellung zurückzuschwenken. Mit Hilfe des Schwenkarmes 105 und der Einkerbungen 108 und 109 wird somit erreicht, dass jede Bewegungsumkehr des Lichtschutzschiebers 91 sowohl beim Öffnen als auch beim Schliessen desselben wirksam verhindert ist, solange der Lichtschutzschieber nicht vollständig in seine Offenlage bzw. in seine Schliesslage bewegt ist.

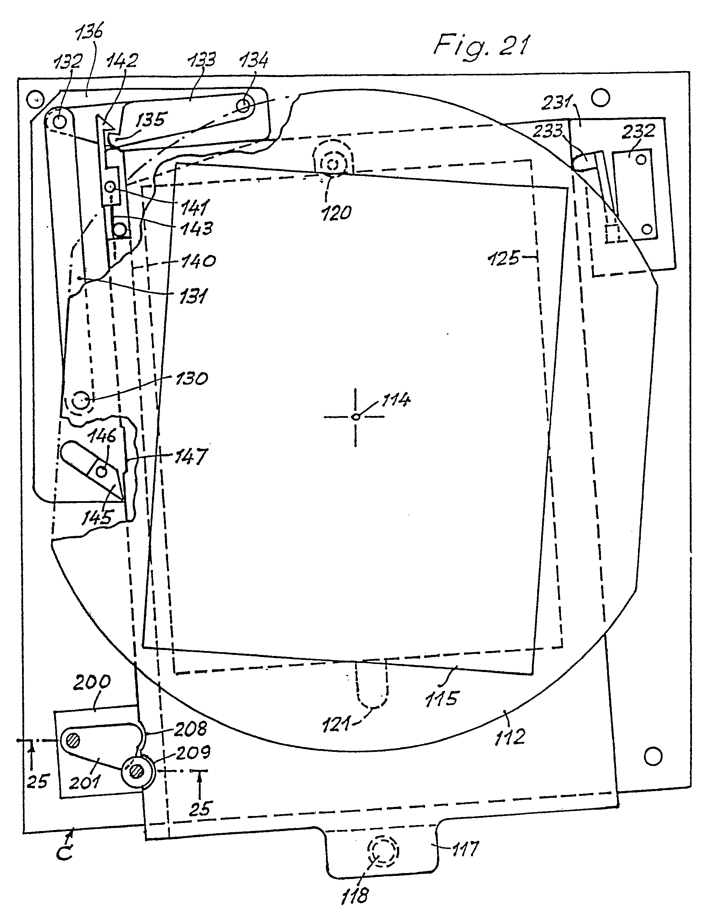

Die unterste Etage C des Gehäuses 50 trägt an ihrer Oberseite eine dünne Scheibe 112 (Fig. 4, 7 und 21), deren Dicke etwa gleich der Dicke eines einzelnen Blattes des photographischen Blattmaterials ist. Die Scheibe 112 weist gemäss Fig. 21 eine im wesentlichen kreisförmige Aussenkontur auf und ist in einer kreisförmigen Führungsausnehmung 113 (Fig. 6) an der Unterseite der mittleren Etage B drehbar geführt, so dass eine Drehung der Scheibe 112 um eine durch ihr Zentrum gehende gedachte Achse 114 möglich ist. Die Scheibe 112 ist ferner mit einer rechteckförmigen Durchbrechung 115 versehen, die nach Form und Grösse an die Flächenabmessungen eines einzelnen Blattes des photographischen Blattmaterials angepasst ist und ein einzelnes solches Blatt mit relativ geringem Spiel aufnehmen kann. In einer noch zu beschreibenden Weise dient die Scheibe 112 mit ihrer Durchbrechung 115 als Vereinzelungsorgan der Separiervorrichtung 55 (Fig. 4).

Unmittelbar unterhalb der Scheibe 112 befindet sich in der Etage C ein weiterer Lichtschutzschieber 116 (Fig. 4, 7 und 21), der wie die bereits beschriebenen anderen Lichtschutzschieber 57, 70 und 91 in eine Schliesslage und eine Offenlage bewegbar ist. Das aus dem Gehäuse 50 herausragende Ende des Lichtschutzschiebers 116 weist einen Handgriff 117 mit einem nach unten ragenden Kupplungszapfen 118 auf. Wie aus Fig. 4 zu erkennen ist, lässt sich der Kupplungszapfen 118 mit einer entsprechenden Bohrung 119 in der Griffleiste des Lichtschutzschiebers 57 der Kassette 53 in Kupplungseingriff bringen, wenn die Kassette in das Gehäuse 50 eingesetzt wird, wonach die beiden Lichtschutzschieber 57 und 116 zwangsläufig jeweils zusammen gleichsinnig zu betätigen sind. Um ein vollständiges Herausziehen des Lichtschutzschiebers 116 aus dem Gehäuse 50 zu verhindern, ist an dem vom Handgriff 117 abgewandten Ende des Lichtschutzschiebers 116 ein Anschlagnocken 120 befestigt, der bei Offenstellung des Lichtschutzschiebers gegen eine stationäre Anschlagfläche 121 an der Etage C des Gehäuses 50 anliegt.

Zwischen dem Lichtschutzschieber 116 und dem die Kassette 53 aufnehmenden Raum der Etage C des Gehäuses 50 befindet sich eine Ausgabeöffnung 125 der Separiervorrichtung 55 (Fig. 4). In Durchlassrichtung betrachtet ist die Ausgabeöffnung 125 nach Form und Grösse an die Flächenabmessungen eines einzelnen Blattes des photographischen Blattmaterials angepasst. Demgemäss weisen die Ausnehmung 90 in der Etage B und die Ausgabeöffnung 125 in der Etage C in der Draufsicht gleiche Form und Grösse auf, aber sie haben um die gedachte Achse 114 in bezug aufeinander verdrehte Lagen. Dies erkennt man leicht durch vergleichende Betrachtung der Fig. 10 und 21. Zweckmässig ist die Ausnehmung 90 im Gehäuse 50 um 4° bis 6° nach der einen Richtung und die Ausgabeöffnung 125 um den gleichen Winkel nach der entgegengesetzten Richtung verdreht. Wenn die Kassette 53 korrekt in das Gehäuse 50 eingesetzt ist, fluchten die vertikalen Begrenzungsflächen der Ausgabeöffnung 125 und der Ausnehmung 56 der Kassette. Die letztere hat demnach im Gehäuse 50 eine wie die Ausgabeöffnung 125 verdrehte Lage, während der in das Gehäuse eingesetzte Container 52 eine wie die Ausnehmung 90 in der Etage B nach der andern Richtung verdrehte Lage aufweist.

Die Scheibe 122 ist nun derart drehbar, dass ihre Durchbrechung 115 in eine mit der Ausnehmung 90 in der Etage B übereinstimmende Lage und in eine mit der Ausgabeöffnung 125 in der Etage C übereinstimmende Lage bringbar ist. Um die Drehbewegungen der Scheibe 112 jeweils automatisch herbeizuführen, wenn der Lichtschutzschieber 116 betätigt wird, sind die folgenden Mittel und Massnahmen vorgesehen: Gemäss Fig. 21 ist die Scheibe 112 mittels eines Gelenkzapfens 130 mit dem einen Ende einer Kupplungsstange 131 verbunden, deren anderes Ende mittels eines zweiten Gelenkzapfens 132 mit einem Schwenkarm 133 in Verbindung steht. Dieser Schwenkarm 133 ist mit einem Zapfen 134 an der Etage C des Gehäuses 50 schwenkbar gelagert und weist einen hakenförmigen Teil 135 auf. Die genannten Organe 131 bis 135 sind in Vertiefungen 136 der Etage C angeordnet und befinden sich unterhalb der Auflageebene der Scheibe 112. In einer Eckpartie des Lichtschutzschiebers 116 ist an der Unterseite desselben eine Leiste 140 befestigt, an welcher mittels eines Zapfens 141 ein Mitnehmerhaken 142 schwenkbar gelagert ist, der zum Zusammenarbeiten mit dem hakenförmigen Teil 135 des Schwenkarmes 133 bestimmt ist. Der Mitnehmerhaken 142 steht unter dem Einfluss einer Feder 143, die bestrebt ist, den Mitnehmerhaken in eine Lage zu schwenken, bei welcher er mit dem hakenförmigen Teil 135 des Schwenkarmes 133 in Eingriff ist oder in Eingriff treten kann. Die Leiste 140 ist in einer Nut 144 der Etage C gleitend geführt. Auch die Organe 131 bis 143 liegen unterhalb der Auflageebene der Scheibe 112.

In der Nähe des mit dem Gelenkzapfen 130 verbundenen Endes der Kupplungsstange 131 ist in der Vertiefung 136 ein zweiarmiger Hebel 145 mittels eines Zapfens 146 schwenkbar gelagert. Das freie Ende des einen Armes dieses Hebels 145 ist zum Zusammenarbeiten mit der benachbarten Längskante des Lichtschutzschiebers 116 bestimmt, während der andere Arm des Hebels 145 zum Zusammenarbeiten mit dem benachbarten Ende der Kupplungsstange 131 bestimmt ist, wie nachstehend erläutert wird. Im Bereich des Hebels 145 weist die erwähnte Längskante des Lichtschutzschiebers 116 eine Einkerbung 147 auf.

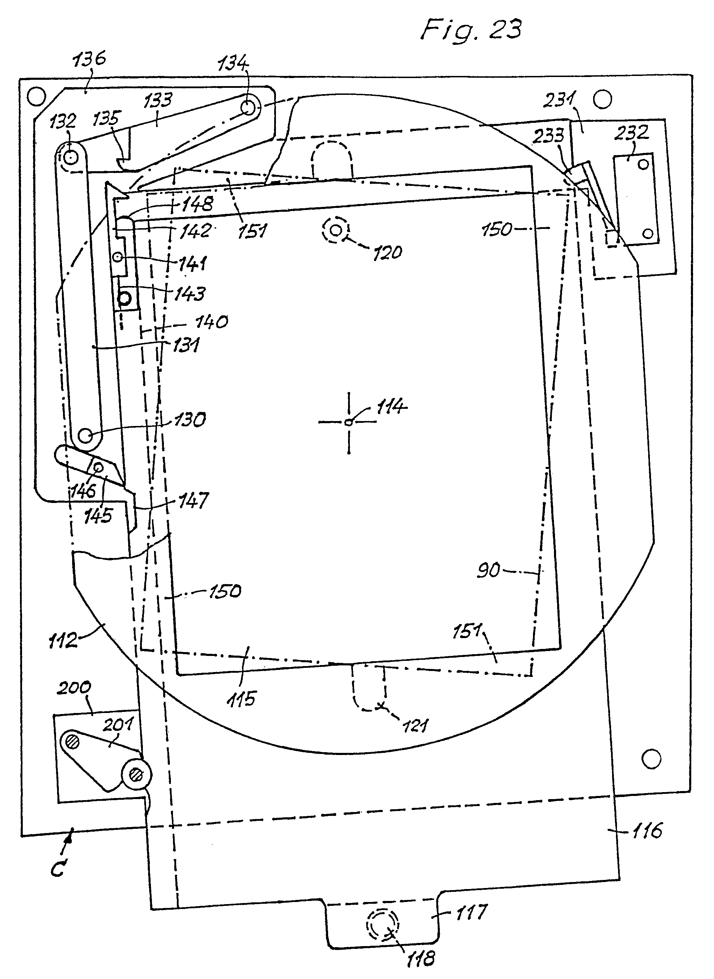

Wenn der Lichtschutzschieber 116 seine in Fig. 21 dargestellte Schliesslage einnimmt, befindet sich die Scheibe 112 in einer solchen Drehstellung, dass ihre Durchbrechung 115 eine mit dem lichten Querschnitt der Ausnehmung 90 in der Etage B des Gehäuses 50 übereinstimmende Lage hat. Bewegt man den Lichtschutzschieber 116 aus seiner Schliesslage gegen die Offenlage, so wird mittels des Mitnehmerhakens 142 der Schwenkarm 133 in Fig. 2 entgegen dem Drehsinn des Uhrzeigers geschwenkt, wodurch über die Kupplungsstange 131 der Scheibe 112 eine Drehbewegung entgegen dem Drehsinn des Uhrzeigers erteilt wird. Diese Drehbewegung ist beendet, wenn der hakenförmige Teil 135 des Schwenkarmes 133 von dem Mitnehmerhaken 142 abgleitet. Die wirksame Länge des Schwenkarmes 133 ist so bemessen, dass durch die erwähnte Drehbewegung die Scheibe 112 um etwa 2° bis 4° weiter gedreht wird, als dies notwendig wäre, um die Durchbrechung 115 der Scheibe 112 in eine mit der Ausgabeöffnung 125 in der Etage C übereinstimmende Lage zu bringen. Dies ist in Fig. 22 veranschaulicht. Unmittelbar bevor der hakenförmige Teil 135 des Schwenkarmes 133 und der Mitnehmerhaken 142 sich trennen, kommt die Einkerbung 147 an der einen Längskante des Lichtschutzschiebers 116 in den Bereich des zweiarmigen Hebels 145 zu liegen, wie in Fig. 21 zu sehen ist. Gleichzeitig stösst das dem Hebel 145 benachbarte Ende der Kupplungsstange 131 gegen den Hebel 145, wodurch letzterer mit seinem einen Ende in Eingriff mit der Einkerbung 147 gebracht wird. Bei der weiteren Bewegung des Lichtschutzschiebers 116 gegen seine Offenstellung gleitet die Einkerbung 147 aus dem Bereich des Hebels 145 hinaus, wie Fig. 23 zeigt, wodurch mittels der Längskante des Lichtschutzschiebers 116 der Hebel 145 ein wenig im Drehsinn des Uhrzeigers verschwenkt wird. Dies hat zur Folge, dass der mit der Kupplungsstange 131 zusammenarbeitende Arm des Hebels 145 die Kupplungsstange 131 ein wenig zurückschiebt (in Fig. 23 gegen oben), wobei gleichzeitig mittels des Gelenkzapfens 130 die Scheibe 112 ein wenig im Drehsinn des Uhrzeigers zurückgedreht wird, bis schliesslich die Durchbrechung 115 der Scheibe 112 eine mit der Ausgabeöffnung 125 genau übereinstimmende Drehlage aufweist. Der Lichtschutzschieber 116 kann nachher frei bis in seine Offenlage bewegt werden.

Wenn man den Lichtschutzschieber 116 aus seiner Offenlage gegen die Schliesslage zurückbewegt, bleibt die Scheibe 112 in Ruhe, bis das jetzt voranlaufende Ende 148 der am Lichtschutzschieber befestigten Leiste 140 gegen den hakenförmigen Teil 135 des Schwenkarmes stösst und den letzteren im Drehsinn des Uhrzeigers in seine Ausgangslage gemäss Fig. 21 zurückschwenkt. Der Mitnehmerhaken 142 gelangt dabei selbsttätig erneut in Eingriff mit dem hakenförmigen Teil 135, was durch die Feder 143 ermöglicht ist. Durch das Zurückschwenken des Schwenkarmes 133 wird über die Kupplungsstange 131 und den Gelenkzapfen 130 auch die Scheibe 112 in ihre Ausgangslage zurückgedreht, bei welcher die Durchbrechung 115 wieder eine mit der Ausnehmung 90 in der Etage B des Gehäuses 50 übereinstimmende Drehlage aufweist.

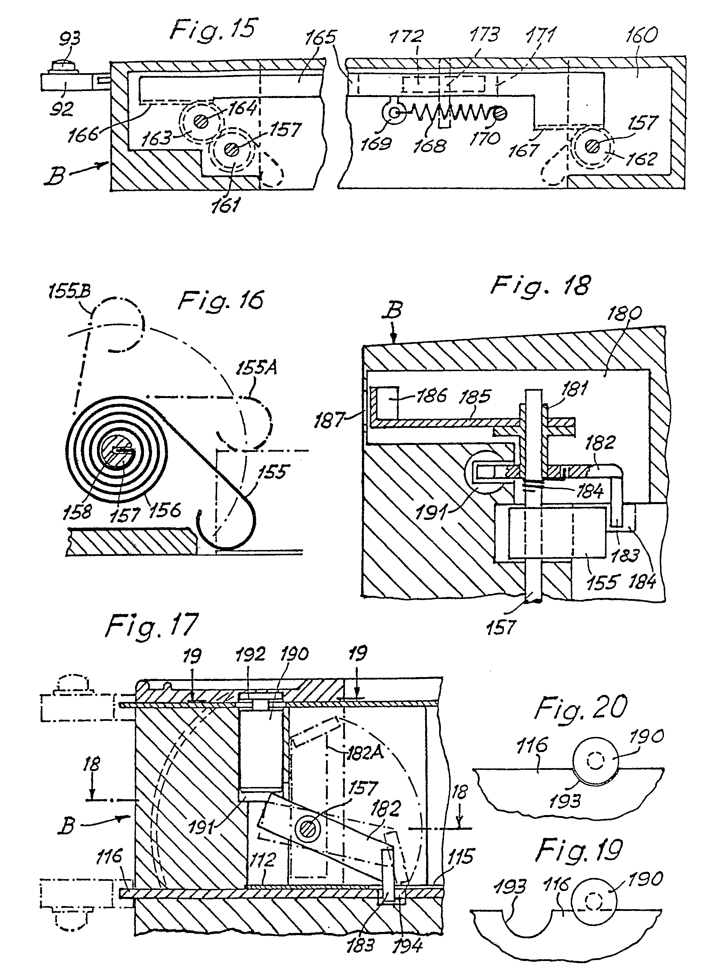

Für das einwandfreie Funktionieren der Separiervorrichtung 55 (Fig. 4) ist wichtig, dass jeweils das unterste Blatt des in der Ausnehmung 90 vorhandenen Stapels von Blattmaterial möglichst flach in der Durchbrechung 115 der Scheibe 112 auf dem Lichtschutzschieber 116 liegt, wenn dieser geschlossen ist bzw. nicht nach unten durchhängt, wenn es bei geöffnetem Lichtschutzschieber 116 lediglich mittels der Eckpartien des Blattes auf dreieckigen Flächenpartien 150 und 151 (Fig. 23) der Scheibe 112 am Rande der Durchbrechung 115 aufliegt. Um dies zu gewährleisten, sind in der Ausnehmung 90 der Etage B des Gehäuses 50 insgesamt vier federelastische Niederhalteorgane 155 (Fig. 4, 6, 10, 16, 18) vorhanden, die dazu bestimmt sind, auf die Eckpartien des jeweils obersten Blattes des Stapels oder gegebenenfalls des einzigen in der Ausnehmung 90 noch vorhandenen Blattes zu drücken. Jedes der Niederhalteorgane 155 hat die in Fig. 16 gezeigte Ausbildung. Demgemäss ist das Niederhalteorgan 155 eine fingerartige Endpartie einer Federbandspirale 156, die um eine Welle 157 gewunden ist. Das innere Ende der Federbandspirale 156 ist in einem Längsschlitz 158 der Welle 157 verankert. Durch Drehen der Welle 157 lässt sich das Niederhalteorgan 155 in eine wirksame Andrückstellung oder in eine unwirksame Stellung bringen. In der Andrückstellung des Niederhalteorgans 155 drückt sein freies Ende unter dem Einfluss der Elastizität der Spiralwindungen abwärts auf das jeweils oberste oder gegebenenfalls das einzige Blatt in der Ausnehmung 90, wobei bei unveränderter Drehstellung der Welle 157 das Niederhalteorgan 155 je nach der Anzahl der in der Ausnehmung 90 vorhandenen Blätter die in Fig. 16 mit voll ausgezogener Linie gezeichnete Lage oder eine nach oben gedrängte Lage etwa gemäss der strichpunktierten Linie 155A einnimmt. Die in Fig. 16 durch eine strichpunktierte Linie 155B dargestellte unwirksame Stellung des Niederhalteorgans wird durch eine ausreichende Drehung der Welle 157 entgegen dem Drehsinn des Uhrzeigers herbeigeführt, wobei sich das Niederhalteorgan gänzlich aus dem lichten Querschnitt der Ausnehmung 90 herausbewegt.

Gemäss Fig. 10 sind jeweils zwei der Niederhalteorgane 155 an einer gemeinsamen Welle 157 angeordnet. Zum Antrieb dieser Welle zwecks Überführung der Niederhalteorgane 155 in ihre Andrückstellungen oder in ihre unwirksamen Stellungen sind die folgenden mechanischen Mittel und Massnahmen vorgesehen: Aus den Fig. 10 und 15 ist ersichtlich, dass die Etage B des Gehäuses 50 ausserhalb der Ausnehmung 90 noch eine weitere Ausnehmung 160 aufweist, die von den beiden parallelen Wellen 157 durchsetzt ist. Innerhalb der Ausnehmung 160 sitzt auf jeder Welle 157 ein Zahnrad 161 bzw. 162, von denen das eine mit einem weiteren Zahnrad 163 kämmt, welches auf einer Hilfswelle 164 drehbar gelagert ist. Ferner ist in der Ausnehmung 160 eine Stange 165 längsverschiebbar gelagert. Diese Stange 165 weist gemäss Fig. 15 an ihren Endpartien je eine geradlinig verlaufende Zahnreihe 166 bzw. 167 auf, von denen die eine mit dem Zahnrad 163 und die andere mit dem Zahnrad 162 kämmt. Durch Verschieben der Stange 165 in ihrer Längsrichtung sind die beiden Wellen 157 mit entgegengesetztem Drehsinn antreibbar. In Fig. 15 ist auch erkennbar, dass das eine Ende einer Zugfeder 168 an einer mit der Stange 165 verbundenen Öse 169 eingehängt ist, während das andere Ende der Zugfeder 168 an einem mit der Etage B verbundenen Zapfen 170 befestigt ist. Die Feder 168 hat das Bestreben, die Stange 165 in Fig. 15 nach rechts und in Fig. 10 nach oben zu ziehen, wodurch die beiden Wellen 157 derart gedreht werden, dass sämtliche Niederhalteorgane 155 ihre unwirksamen Stellungen einnehmen. Gemäss Fig. 10 ist die Stange 165 mit einer weiteren geradlinig verlaufenden Zahnreihe 171 versehen, mit welcher ein Zahnradsegment 172 kämmt, das um eine vertikale Achse 173 drehbar ist. Das Zahnradsegment 172 weist einen etwa radial abstehenden Arm 174 auf, der zum Zusammenarbeiten mit der benachbarten Längskante des Lichtschutzschiebers 91 an der oberen Mündung der Ausnehmung 90 bestimmt ist. Wenn der Lichtschutzschieber 91 in seine Schliesslage bewegt wird, stösst er gegen den Arm 174 des Zahnradsegmentes 172, wodurch letzteres um die Achse 173 derart geschwenkt wird, dass es eine Verschiebung der Stange 165 entgegen dem Einfluss der Zugfeder 168 (Fig. 15) hervorruft. Durch diese Verschiebebewegung der Stange 165 werden die beiden Wellen 157 so gedreht, dass sämtliche Niederhalteorgane 155 ihre Andrückstellungen einnehmen. Wenn man umgekehrt den Lichtschutzschieber 91 in seine Offenlage bewegt, wird der Arm 174 des Zahnradsegmentes 172 freigegeben, worauf unter dem Einfluss der Zugfeder 168 (Fig. 15) mittels der Stange 165 und der Zahnräder 161 bis 163 die Niederhalteorgane 155 in ihre unwirksamen Stellungen zurückkehren.

Gemäss den Fig. 17 und 18 ist die Etage B des Gehäuses 50 mit einer weiteren Ausnehmung 180 versehen, in welche eine der Wellen 157 hineinragt. Innerhalb der Ausnehmung 180 ist auf der genannten Welle 157 eine Nabe 181 drehbar gelagert, an welcher ein zweiarmiger Hebel 182 befestigt ist. Der eine Arm des Hebels 182 ist als Tastfinger 183 ausgebildet, der seitwärts ein wenig in die Ausnehmung 90 der Etage B hineinragt und dazu bestimmt ist, die Höhe des in der Ausnehmung 90 vorhandenen Stapels von Blattmaterial zu erfühlen. Eine Feder 184 (Fig. 18) ist mit ihrem einen Ende an der Welle 157 und mit ihrem andern Ende am Hebel 182 verankert. Diese Feder 184 hat das Bestreben, den Hebel 182 in Fig. 18 im Drehsinn des Uhrzeigers in bezug auf die Welle 157 zu verschwenken, so dass der Tastfinger 183 jeweils in Anlage mit dem obersten Blatt in der Ausnehmung 90 ist. An der Nabe 181 ist ferner ein Arm 185 befestigt, der einen zylindrisch gebogenen Teil 186 trägt, welcher sich hinter einer Fensteröffnung 187 in der Etage B befindet und eine Skala oder Markierungen zum visuellen Anzeigen des Füllzustandes der Ausnehmung 90 aufweist.

Der vom Tastfinger 183 abgewandte Arm des Hebels 182 ist zum Zusammenarbeiten mit einem Kolben 190 (Fig. 17) bestimmt, der in einer vertikalen Bohrung 191 der Etage B verschiebbar geführt ist. Nahe bei dem oberen Ende des Kolbens 190 weist dieser eine Umfangsrille 192 auf. Die Bohrung 191 und der Kolben 190 sind derart angeordnet und ausgebildet, dass die oberhalb der Umfangsrille 192 liegende Endpartie des Kolbens 190 teilweise in eine kreissegmentförmige Kerbe 193 an einer Längskante des Lichtschutzschiebers 91 eingreifen kann, wie in den Fig. 10 und 20 zu sehen ist. Wenn kein einziges Blatt des photographischen Blattmaterials in der Ausnehmung 90 vorhanden ist, fällt der Tastfinger 183 des Hebels 182 unter dem Einfluss der Feder 184 durch die Durchbrechung 115 der Scheibe 112 hindurch in eine kleine Ausnehmung 194 (Fig. 17, 18 und 21) in einer Randpartie des unterhalb der Scheibe 112 liegenden Lichtschutzschiebers 116. Hierdurch wird letzterer in seiner Schliesslage gesperrt und dem Hebel 182 erlaubt, eine solche Schwenklage einzunehmen, dass sein vom Tastfinger 183 abgewandter Arm den Kolben 190 aufwärts schiebt, bis die Umfangsrille 192 auf die Höhe des oberen Lichtschutzschiebers 91 zu liegen kommt, wie Fig. 17 deutlich zeigt. Bei dieser Stellung des Kolbens 190 lässt sich der Lichtschutzschieber 91 öffnen, weil die mit der Kerbe 193 versehene Längskante des Lichtschutzschiebers ungehindert durch die Umfangsrille 192 des Kolbens 190 laufen kann, wie in Fig. 19 veranschaulicht ist.

Wie bereits beschrieben, werden beim Öffnen des Lichtschutzschiebers 91 automatisch die Wellen 157 mittels des Zahnradsegmentes 172, der Stange 165 und der Zahnräder 161 bis 163 in Drehung versetzt, so dass die Niederhalteorgane 155 ihre unwirksamen Stellungen einnehmen. Gleichzeitig und auf analoge Weise wird über die Feder 184 (Fig. 18) auch der Hebel 182 in eine unwirksame Stellung geschwenkt, die in Fig. 17 durch strichpunktierte Linien bei 182A angedeutet ist. Anschliessend kann ein Stapel von Blattmaterial von oben in die Ausnehmung 90 eingefüllt werden. Beim Schliessen des Lichtschutzschiebers 91 werden wie beschrieben die Niederhalteorgane 155 automatisch in ihre wirksamen Andrückstellungen geschwenkt, wobei gleichzeitig auch der Hebel 182 so zurückgeschwenkt wird, dass sein Tastfinger 183 unter dem Einfluss der Feder 184 auf dem obersten Blatt des Stapels aufliegt. Solange sich mindestens ein Blatt in der Ausnehmung 90 befindet, weist der Hebel 182 eine Schwenklage auf, bei welcher sein vom Tastfinger 183 abgewandter Arm dem Kolben 190 gestattet, sich unter dem Einfluss der Schwerkraft nach unten zu bewegen, soweit es die Bohrung 191 erlaubt. Dabei gelangt die oberhalb der Umfangsrille 192 liegende Endpartie des Kolbens 190 in Eingriff mit der Kerbe 193 des Lichtschutzschiebers 91, wodurch letzterer in seiner Schliesslage gesperrt wird.

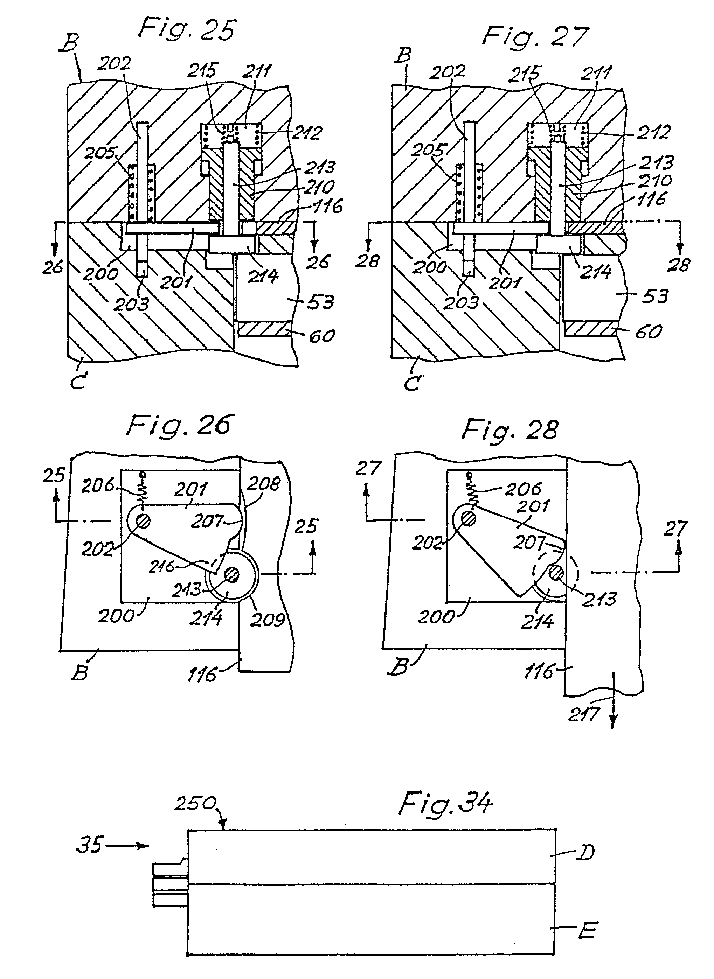

Gemäss den Fig. 21 und 25 bis 32 ist dem unterhalb der drehbaren Scheibe 112 angeordneten Lichtschutzschieber 116 die nachstehend beschriebene Rückschubsperr- und Verriegelungsvorrichtung zugeordnet. In einer Vertiefung 200 an der Oberseite der Etage C des Gehäuses 50 befindet sich ein im wesentlichen kreissektorförmiges Schwenkglied 201. Dieses sitzt fest auf einer vertikalen Achse 202, die in miteinander fluchtenden Bohrungen 203 und 204 der Etagen C und B drehbar und achsial verschiebbar gelagert ist. Das Schwenkglied 201 steht unter dem Einfluss einer Druckfeder 205, die bestrebt ist, das Schwenkglied 201 in der Vertiefung 200 nach unten zu schieben. Eine weitere Feder 206, die in den Fig. 26, 28, 30 und 32 lediglich schematisch angedeutet ist, hat das Bestreben, das Schwenkglied 201 in einer mittleren Schwenklage zu halten, aus der es nach der einen und der anderen Seite hin verschwenkt werden kann. Eine konvex bombierte Endpartie 207 des Schwenkgliedes 201 ist zum Zusammenarbeiten mit der benachbarten Längskante des Lichtschutzschiebers 116 bestimmt. Die erwähnte Längskante des Lichtschutzschiebers weist eine flache Einkerbung 208 auf, die in der Schliesslage des Lichtschutzschiebers im Bereich des Schwenkgliedes 201 liegt und demselben erlaubt, seine mittlere Schwenklage einzunehmen, wie in Fig. 26 zu sehen ist. Angrenzend an die Einkerbung 208 ist der Lichtschutzschieber 116 mit einer kreissegmentförmigen Kerbe 209 versehen, in welche ein als Verriegelungsorgan dienender Kolben 210 (Fig. 25, 27, 29-32) teilweise eingreifen kann, um den Lichtschutzschieber in seiner Schliesslage zu sperren. Der Kolben 210 ist in einer vertikalen Bohrung 211 der Etage B verschiebbar gelagert und steht unter dem Einfluss einer Druckfeder 212, die bestrebt ist, den Kolben 210 abwärts zu bewegen und mit der Kerbe 209 in Eingriff zu bringen. In einer achsialen Bohrung des Kolbens 210 ist ein Stift 213 längsverschiebbar geführt, dessen unteres Ende mit einem Kopf 214 versehen ist. Der Stift 213 steht ebenfalls unter dem Einfluss einer Druckfeder 215, die das Bestreben hat, den Stift 213 und damit den Kopf 214 nach unten zu bewegen.

Wenn der Lichtschutzschieber 116 geschlossen und eine Kassette 53 in den hierfür vorgesehenen Raum der untersten Etage C des Gehäuses 50 eingesetzt ist, nehmen die beschriebenen beweglichen Bauteile die in den Fig. 25 und 26 gezeigten Stellungen ein. Das Schwenkglied 201 befindet sich in seiner mittleren Schwenklage, bei welcher die bombierte Endpartie 207 des Schwenkgliedes in die flache Einkerbung 208 des Lichtschutzschiebers eingreift. Eine andere Partie 216 des Schwenkgliedes 201 befindet sich zwischen dem Kopf 214 und dem unteren Ende des Kolbens 210. Durch die Kassette 53, die mittels der Andrückplatte 60 aufwärts an die Anschlagschultern 61 und 62 (Fig. 4 und 7) gedrückt ist, wird der Kopf 214 in einer nach oben bewegten Lage gehalten, wodurch auch das Schwenkglied 201 und der Kolben 210 nach oben bewegt sind. Der Kolben 210 befindet sich somit nicht im Eingriff mit der Kerbe 209 des Lichtschutzschiebers 116, weshalb letzterer in seine Offenlage bewegt werden kann.

Sobald der Lichtschutzschieber 116 aus seiner Schliesslage gemäss dem Pfeil 217 in Fig. 28 gegen die Offenlage hin bewegt wird, gelangt die flache Einkerbung 208 ausserhalb des Bereiches des Schwenkgliedes 201, und letzteres wird durch die benachbarte Längskante des Lichtschutzschiebers entgegen dem Einfluss der Feder 206 verschwenkt, wie in Fig. 28 zu sehen ist. In dieser Schwenklage übt das Schwenkglied 201 auf den Lichtschutzschieber 116 eine Gesperrewirkung aus, durch welche ein Zurückschieben entgegen dem Pfeil 217 verhindert wird, ohne dass hierbei die weitere Bewegung in die Offenlage behindert ist. Wenn die Offenstellung des Lichtschutzschiebers 116 erreicht wird, hat das Schwenkglied 201 Gelegenheit, unter dem Einfluss der Feder 206 in die mittlere Schwenklage zurückzukehren.

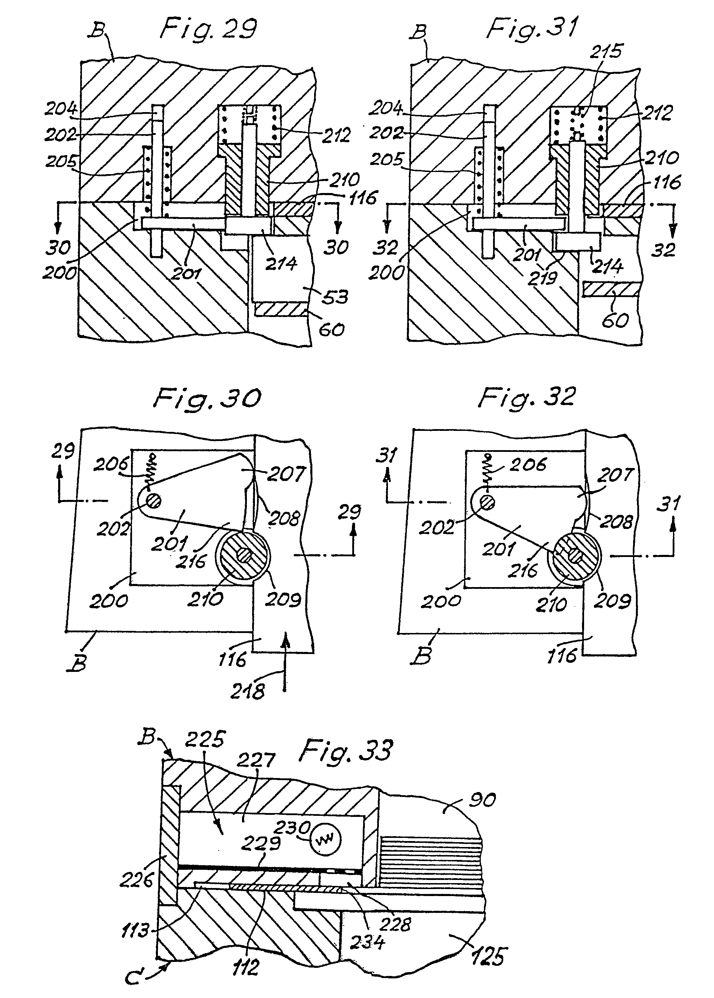

Bewegt man nachher den Lichtschutzschieber 116 aus seiner Offenlage gemäss dem Pfeil 218 in Fig. 30 gegen die Schliesslage hin, so fährt die Längskante des Lichtschutzschiebers wieder gegen die bombierte Endpartie 207 des Schwenkgliedes 201, wodurch dieses aus seiner Mittelstellung nun in der entgegengesetzten Richtung verschwenkt wird, wie in Fig. 30 gezeigt ist. In dieser Schwenklage übt das Schwenkglied 201 auf den Lichtschutzschieber 116 eine Gesperrewirkung aus, die jede Bewegung entgegen dem Pfeil 218 verhindert. Zudem ist bei dieser Schwenklage des Schwenkgliedes 201 seine Partie 216 nicht mehr in Berührung mit dem unteren Ende des Kolbens 210, so dass dieser nun unter dem Einfluss der Feder 212 auf den Längsrand des Lichtschutzschiebers 116 aufsitzt. Sobald der Lichtschutzschieber in seine Schliesslage einläuft, fällt der Kolben 210 unter dem Einfluss der Feder 212 in die Kerbe 209 ein, wodurch der Lichtschutzschieber in der Schliesslage verriegelt wird, wie die Fig. 29 und 30 zeigen. Das Schwenkglied 201 wird unter dem Einfluss der Feder 205 ebenfalls nach unten geschoben, wonach es durch den Kopf 214 daran gehindert wird, in seine mittlere Schwenklage zurückzukehren.

Bevor der Lichtschutzschieber 116 erneut geöffnet und wieder geschlossen werden kann, muss die Kassette 53 aus der Etage C herausgenommen und durch eine andere leere Kassette ersetzt werden. Durch das Herausnehmen der Kassette 53 wird dem Kopf 214 erlaubt, sich unter dem Einfluss der Feder 215 ebenfalls nach unten zu bewegen, bis er auf einer Anschlagschulter 219 aufsitzt, wie in Fig. 31 ersichtlich ist, wodurch nun dem Schwenkglied 201 Gelegenheit gegeben wird, unter dem Einfluss der Feder 206 in die mittlere Schwenklage zurückzukehren, bei welcher seine Partie 216 zwischen den Kopf 214 und das untere Ende des Kolbens 210 eingreift. Wenn nachher eine neue Kassette in die Etage C eingesetzt wird, wird der Kopf 214 mittels der Kassette nach oben bewegt, wodurch die in den Fig. 25 und 26 dargestellte Ausgangslage der beweglichen Teile herbeigeführt wird.

Man erkennt, dass durch die in den Fig. 25 bis 32 gezeigte Ausbildung zweierlei erreicht ist: Erstens dient das Schwenkglied 201 als Rückschubsperrorgan, das jede Bewegungsumkehr des Lichtschutzschiebers 116 während seiner Bewegung von der Schliesslage in die Offenlage oder umgekehrt wirksam verhütet. Zweitens dient der Kolben 210 als Verriegelungsorgan, um den Lichtschutzschieber 116 nach jeder Betätigung, d.h. jedem einmaligen Öffnen und Schliessen, in seiner Schliesslage zu sperren, solange kein Wechsel der Kassette 53 in der Etage C erfolgt ist. Hierdurch wird vermieden, dass versehentlich zwei photographische Blätter in eine Kassette eingebracht werden können.

In der Etage B des Gehäuses 50 ist gemäss Fig. 33 noch eine Markierungseinrichtung 225 vorhanden, die zum Anbringen von photographischen Markierungen, wie z.B. Datum, Zeit, Copyright-Hinweis usw., in der lichtempfindlichen Schicht des mittels der Separiervorrichtung 55 (Fig. 4) ausgegebenen Blattes geeignet ist. Die Markiervorrichtung 225 befindet sich in einer seitlich zugänglichen und mit einem abnehmbaren Deckel 226 verschlossenen Ausnehmung 227 der Etage B, welche Ausnehmung auch in Fig. 10 angedeutet ist. Von der Ausnehmung 227 führt eine schlitzförmige Öffnung 228 zu der flachen kreisförmigen Ausnehmung 113, in welcher die Scheibe 112 drehbar gelagert ist. Die Markierungseinrichtung 225 weist eine Maske 229 mit lichtdurchlässigen und lichtundurchlässigen Partien sowie eine Blitzlichtquelle 230 auf, die dazu bestimmt ist, Lichtstrahlen durch die lichtdurchlässigen Partien der Maske 229 und durch die schlitzförmige Öffnung 228 hindurchzusenden. Die beschriebene Markierungseinrichtung 225 befindet sich an einer Stelle ausserhalb der Ausnehmung 90 in der Etage B, und zwar oberhalb einer Eckpartie der Ausgabeöffnung 125 in der Etage C, so dass beim Drehen der Scheibe 112 in die in Fig. 23 und 33 gezeigte Drehlage eine Randpartie der Durchbrechung 115 der Scheibe 112 unter die Öffnung 228 zu liegen kommt. In einer Vertiefung 231 in der Oberseite der Etage C ist gemäss Fig. 21 ein elektrischer Schalter 232 angeordnet, der einen mit einer Längskante des Lichtschutzschiebers 116 zusammenarbeitenden Betätigungsarm 233 aufweist. Wenn der Lichtschutzschieber 116 aus seiner Schliesslage gegen die Offenlage hin bewegt wird, hat dies — wie mit Bezug auf die Fig. 21 bis 23 beschrieben wurde — eine Drehung der Scheibe 112 in die in Fig. 23 gezeigte Drehstellung zur Folge. Sobald diese Drehstellung erreicht ist, gleitet die mit dem Betätigungsarm 233 zusammenarbeitende Längskante des Lichtschutzschiebers von dem Betätigungsarm 233 ab, wobei der Schalter 232 betätigt und die Blitzlichtquelle 230 kurzzeitig gezündet wird.

Im Zusammenhang mit den Fig. 22 und 23 wurde bereits beschrieben, dass die Scheibe 112 zunächst etwas weiter als notwendig gedreht und anschliessend um einige Grad zurückgedreht wird. Hierdurch ist erreicht, dass jeweils das in der Durchbrechung 115 der Scheibe 112 liegende photographische Blatt mit einer seiner Schnittkanten satt an der im Bereich der Markierungseinrichtung 225 verlaufenden Begrenzungsfläche 234 (Fig. 33) anliegt, wenn die Blitzlichtquelle gezündet wird. Deshalb hat die auf das Blatt belichtete Markierung immer den gleichen Abstand von der betreffenden Schnittkante des Blattes, ungeachtet des notwendigen Spiels, welches das Blatt in der Durchbrechung 115 der Scheibe 112 haben muss, und ungeachtet der innerhalb der üblichen Toleranzgrenzen variierenden Flächenabmessungen der handelsüblichen photographischen Blätter.

Gegebenenfalls kann eine zweite Markierungseinrichtung der beschriebenen Art an einer diametral gegenüberliegenden Stelle der Etage B angeordnet sein.

Die vertikalen Begrenzungsflächen der Ausnehmung 52 des Containers 51 wie auch der Ausnehmung 90 in der Etage B sind zweckmässig mit vertikal verlaufenden Rippen und/oder Nuten 52A (Fig. 8) bzw. 90A (Fig. 10) versehen, um den Druckausgleich der Luft oberhalb und unterhalb der Blätter zu erleichtern und dadurch das Absinken der Blätter unter dem Einfluss der Schwerkraft zu begünstigen.

Die Gebrauchs- und Wirkungsweise der beschriebenen Einrichtung im ganzen ist kurz wie folgt:

Es ist angenommen, dass in der Ausnehmung 52 des Containers 51 ein Stapel aus 20 bis 50 photographischen Filmblättern vorhanden ist, die entweder im Herstellerwerk oder durch den Photographen bei Dunkelheit in den Container eingebracht worden sind. Der Lichtschutzschieber 70 des Containers 51 ist geschlossen, um die Filmblätter gegen Umgebungslicht abzuschirmen. Der gefüllte Container 51 wird in der aus Fig. 4 ersichtlichen Weise in den dafür vorgesehenen Raum der obersten Etage A des Gehäuses 50 eingesetzt, wobei der Kupplungszapfen 93 am Lichtschutzschieber 91 der Etage B automatisch mit der Bohrung 94 des Kupplungsstückes 95 am Lichtschutzschieber 70 des Containers 51 in Kupplungseingriff gelangt. Durch das Einsetzen des Containers 51 werden automatisch auch die als Verriegelungsorgane dienenden Kolben 83 und 99 im Container (Fig. 5 und 8) bzw. in der Etage B (Fig. 6 und 10) in ihre unwirksamen Stellungen geschoben, so dass die Lichtschutzschieber 70 und 91 entriegelt werden. Es ist weiter angenommen, dass sich kein einziges Filmblatt mehr in der Ausnehmung 90 der Etage B befindet und somit durch den Hebel 182 (Fig. 17) auch der als Verriegelungsorgan dienende Kolben 190 in seine unwirksame Stellung geschoben ist, bei der er den Lichtschutzschieber 91 nicht länger in der Schliesslage sperrt. Dann kann man die beiden miteinander gekuppelten Lichtschutzschieber 70 und 91 zusammen in ihre Offenlagen bewegen, wobei mittels des Zahnradsegmentes 172, der Stange 165 und der Zahnräder 161 bis 163 automatisch die Wellen 157 in der Etage B so gedreht werden, dass sämtliche Niederhalteorgane 155 wie auch der Hebel 182 in ihre unwirksamen Stellungen geschwenkt werden, bei denen sie sich gänzlich ausserhalb des lichten Querschnittes der Ausnehmung 90 befinden. Der Stapel der photographischen Filmblätter fällt dann unter dem Einfluss der Schwerkraft von dem Container 51 in die als Stauraum dienende Ausnehmung 90 der Etage B. Nachher schiebt man die beiden Lichtschutzschieber 70 und 91 zusammen in ihre Schliesslagen, wonach der leere Container 51 aus der Etage A entnommen und gegebenenfalls einem anderen Verwendungszweck zugeführt werden kann. Beim Abnehmen des Containers 51 wird der Lichtschutzschieber 91 an der oberen Mündung oder Eintrittsöffnung der Ausnehmung 90 automatisch wieder in seiner Schliesslage mittels des Kolbens 99 gesperrt. Durch die Bewegung des Schiebers 91 in seine Schliesslage werden automatisch die Niederhalteorgane 155 wie auch der Hebel 182 in ihre wirksamen Stellungen zurückgeschwenkt, bei denen die Niederhalteorgane 155 bzw. der Tastfinger 183 auf dem obersten Blatt des Stapels in der Ausnehmung 90 aufliegen. Das unterste Filmblatt liegt dann innerhalb der Durchbrechung 115 der drehbaren Scheibe 112 auf dem Lichtschutzschieber 116 der Etage C.

Solange keine Kassette 53 in dem dafür vorgesehenen Raum der untersten Etage C eingesetzt ist, bleibt der Lichtschutzschieber 116 mittels des als Verriegelungsorgan dienenden Kolbens 210 (Fig. 31 und 32) in der Schliesslage gesperrt. Setzt man eine Kassette 53 in die Etage C ein, so wird automatisch der Kolben 210 in eine unwirksame Lage bewegt und damit der Lichtschutzschieber 16 entriegelt (Fig. 25 und 26). Beim Einsetzen der Kassette 53 gelangt der Kupplungszapfen 118 am Lichtschutzschieber 116 selbsttätig in Kupplungseingriff mit der Bohrung 119 im Handgriff 58 des Lichtschutzschiebers 57 der Kassette. Daher müssen dann die beiden Lichtschutzschieber 116 und 57 zusammen gleichsinnig betätigt werden. Wenn man sie zusammen in die Offenstellungen bewegt, wird der als Vereinzelungsorgan dienenden Scheibe 112 selbsttätig eine Drehbewegung erteilt, so dass die Durchbrechung 115 aus ihrer mit dem Grundriss der Ausnehmung 90 übereinstimmenden Drehlage gemäss Fig. 21 in die mit dem Grundriss der Ausgabeöffnung 125 übereinstimmende Drehlage gemäss Fig. 23 verdreht wird. Hierdurch wird das in der Durchbrechung 115 liegende unterste Filmblatt vom übrigen Stapel in der Ausnehmung 90 abgetrennt und in die Ausgabeöffnung 125 überführt. Unmittelbar bevor das abgetrennte Filmblatt in die Ausgabeöffnung 125 fallen kann, wird mittels des Schalters 232 die Blitzlichtquelle 230 der Markierungseinrichtung 225 (Fig. 33) gezündet, wodurch die in der Maske 229 enthaltenen lichtdurchlässigen Markierungen auf einen Rand des Filmblattes projiziert werden. Anschliessend fällt das abgetrennte Filmblatt unter dem Einfluss der Schwerkraft durch die Ausgabeöffnung 125 hindurch in die Ausnehmung der Kassette 53. Nachher schiebt man die beiden Lichtschutzschieber 116 und 57 zusammen in ihre Schliesslagen, wonach automatisch der Lichtschutzschieber 116 mittels des als Verriegelungsorgan dienenden Kolbens 210 in der Schliesslage gesperrt wird (Fig. 29 und 30). Schliesslich kann man die mit einem Filmblatt geladene Kassette 53 aus der Etage C des Gehäuses 50 herausnehmen und für photographische Zwecke gebrauchen.

Auf die beschriebene Weise lassen sich die in der Ausnehmung 90 vorhandenen Filmblätter bei vollem Umgebungslicht einzeln nacheinander in Kassetten 53 einbringen. Wenn das letzte Filmblatt mittels der drehbaren Scheibe 112 ausgegeben worden ist und die Lichtschutzschieber 116 und 57 in ihre Schliesslagen bewegt werden, fällt der Tastfinger 183 des Hebels 182 gemäss Fig. 17 in die Ausnehmung 194 des Lichtschutzschiebers 116 ein, wodurch dieser in der Schliesslage gesperrt wird. Hierdurch ist vermieden, dass eine oder mehrere weitere Kassetten vermeintlich mit Filmblättern geladen werden, wenn keine Filmblätter mehr in der Ausnehmung 90 vorhanden sind.

Solange noch mindestens ein Filmblatt in der Ausnehmung 90 vorhanden ist, lässt sich der Lichtschutzschieber 91 an der oberen Mündung oder Eintrittsöffnung der Ausnehmung 90 nicht öffnen, selbst wenn ein Container 51 in die oberste Etage A eingesetzt ist. Diese Sperre wird mittels des Kolbens 190 (Fig. 10 und 19) bewirkt. Hierdurch ist ein Überfüllen der Ausnehmung 90 verhütet.

Es kann aber der Fall eintreten, dass der Photograph wünscht, die in der Ausnehmung 90 noch vorhandenen Filmblätter herauszunehmen und durch andere zu ersetzen, die z.B. eine andere Empfindlichkeit aufweisen, wobei ebenfalls jeder Lichteinfall auf die auszuwechselnden Filmblätter vermieden werden soll. Dies kann mit der beschriebenen Einrichtung in einfacher Weise wie folgt geschehen: Ein leerer Container 51 wird in den hierfür vorgesehenen Raum in der Etage A eingesetzt, wobei — wie bereits beschrieben — automatisch die als Verriegelungsorgane für die Lichtschutzschieber 70 und 91 dienenden Kolben 83 und 99 (Fig. 5 und 6) in ihre unwirksamen Stellungen geschoben werden. Dann wird die ganze Einrichtung auf den Kopf gestellt, so dass dann die Etage B unten und die Etage C oben ist. In dieser Lage der Einrichtung bewegt sich der in der Etage B vorhandene Kolben 190 (Fig. 17) unter dem Einfluss der Schwerkraft selbsttätig in seine als Verriegelungsorgan unwirksame Stellung, bei welcher die Umfangsrille 192 des Kolbens 190 mit dem Lichtschutzschieber 91 fluchtet. Die beiden miteinander gekuppelten Lichtschutzschieber 70 und 91 lassen sich nachher zusammen öffnen, wonach die in der Ausnehmung 90 noch vorhandenen Filmblätter unter dem Einfluss der Schwerkraft in die Ausnehmung 52 des Containers 51 fallen. Nachher schiebt man die beiden Schieber 70 und 91 in ihre Schliesslagen zurück, worauf man den die entnommenen Filmblätter enthaltenden Container 51 aus der Etage herausnehmen kann. Die darin liegenden Filmblätter können später bei Bedarf wieder in die Ausnehmung 90 eingefüllt werden, wie vorstehend beschrieben wurde.

Es ist ersichtlich, dass die beschriebene Einrichtung eine bequeme und sichere Handhabung von lichtempfindlichem photographischem Blattmaterial bei vollem Umgebungslicht erlaubt, ohne dass die Gefahr von unerwünschtem Lichteinfall auf das photographische Blattmaterial besteht. Auch ist erkennbar, dass die Einrichtung in vorteilhafter Weise derart ausgebildet ist, dass durch die verschiedenen Sperren Fehlmanipulationen praktisch ausgeschlossen sind.

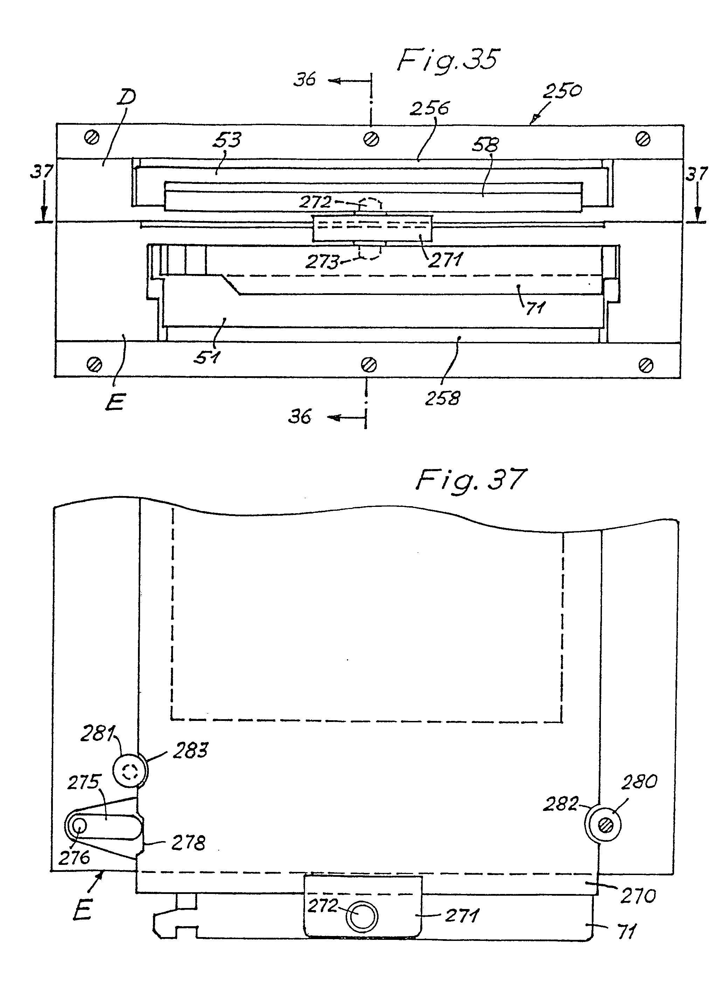

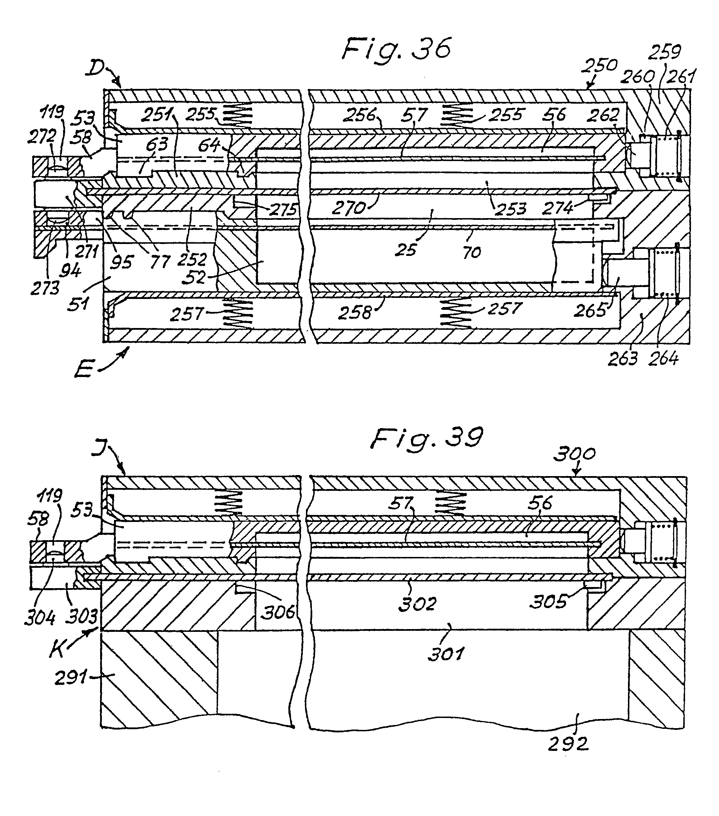

In den Fig. 34 bis 37 ist ein Beispiel einer Einrichtung veranschaulicht, mit welcher ermöglicht ist, belichtete oder allenfalls noch unbelichtete Filmblätter aus Kassetten bei vollem Umgebungslicht in einen Container umzufüllen, ohne dass die Gefahr von störendem Lichteinfall auf die Filmblätter besteht. Diese Einrichtung weist ein aus zwei sandwichartig übereinander angeordneten Etagen D und E gebildetes Gehäuse 250 auf. Die obere Etage D ist zur Aufnahme einer Kassette 53 der bereits beschriebenen Art bestimmt, wobei die Kassette jedoch umgekehrt, d.h. mit nach unten gewandter Durchlassöffnung ihrer Ausnehmung 56 einzusetzen ist. Die untere Etage E ist zur Aufnahme eines Containers 51 der vorstehend beschriebenen Bauweise eingerichtet, wobei der Container aber mit nach oben gewandter Durchlassöffnung seiner Ausnehmung 52 einzusetzen ist. Gemäss Fig. 36 ist im Boden 251 der oberen Etage D und in der Decke 252 der unteren Etage E je eine Durchlassöffnung 253 bzw. 254 vorhanden, die nach Form und Grösse den Flächenabmessungen eines Filmblattes angepasst ist. Diese Durchlassöffnungen 253 und 254 haben übereinstimmende Lage und sind auf die Ausnehmung 56 der in die Etage D eingesetzten Kassette 53 und auf die Ausnehmung 52 des in die Etage E eingesetzten Containers 51 ausgerichtet.

In der oberen Etage D befindet sich eine unter dem Einfluss von Federn 255 stehende Andrückplatte 256 zum Andrücken der Kassette 53 an den Boden 251 der Etage D. In analoger Weise ist in der Etage E eine unter dem Einfluss von Federn 257 stehende Andrückplatte 258 zum Andrücken des Containers 51 an die Decke 252 der Etage E vorhanden. Die Kassette 53 und der Container 51 sind nach Art von Schubladen in das Gehäuse 250 einschiebbar. In der rückseitigen Wandpartie 259 der oberen Etage D befindet sich eine Ausnehmung 260, in der ein unter dem Einfluss einer Druckfeder 261 stehender Puffer 262 verschiebbar gelagert ist, gegen den die Kassette 53 anliegt. Die Feder 261 und der Puffer 262 haben das Bestreben, die Kassette 53 ein wenig aus der Etage D hinauszuschieben. Dies ist jedoch so lange verhindert, als die Rippen 63 und 64 der Kassette mit entsprechenden Nuten im Boden 251 der Etage D in Eingriff sind. In analoger Weise ist auch in der rückseitigen Wandpartie 263 der unteren Etage E ein unter dem Einfluss einer Feder 264 stehender Puffer 265 vorhanden, gegen den der Container 51 anliegt. Die Feder 264 und der Puffer 265 haben das Bestreben, den Container 51 ein wenig aus der Etage E hinauszuschieben. Dies ist jedoch so lange verhindert, als die Nuten 77 des Containers mit entsprechenden Rippen an der Decke 252 der Etage E in Eingriff sind. Die in der beschriebenen Weise ausgebildeten Etagen D und E bilden zusammen ein Verbindungsstück zum lichtdichten Verbinden der Ausnehmungen 52 und 56 des Containers 51 bzw. der Kassette 53.

Zwischen dem Boden 251 der oberen Etage D und der Decke 252 der unteren Etage E befindet sich ein Lichtschutzschieber 270, der in eine die Durchlassöffnungen 253 und 254 lichtdicht verschliessende Schliesslage und in eine die genannten Öffnungen vollständig freigebende Offenlage bewegbar ist. Das aus dem Gehäuse 250 herausragende Ende des Lichtschutzschiebers 270 ist mit einem Kupplungsstück 271 versehen, das zwei Kupplungszapfen 272 und 273 aufweist. Die letzteren sind dazu bestimmt, mit der Bohrung 119 in der Griffleiste 58 am Lichtschutzschieber 57 der Kassette 53 bzw. mit der Bohrung 94 im Kupplungsstück 95 am Lichtschutzschieber 70 des Containers 51 in Kupplungseingriff zu treten, wenn die Kassette und der Container in das Gehäuse 250 eingesetzt werden. Die drei Lichtschutzschieber 57, 70 und 270 sind dann miteinander gekuppelt, um jeweils gleichzeitig und gleichsinnig bewegt zu werden. Der Lichtschutzschieber 270 weist nahe bei seinem vom Kupplungsstück 271 abgewandten Ende einen Anschlagnocken 274 auf, der gegen eine Anschlagfläche 275 stösst, wenn der Lichtschutzschieber seine Offenlage erreicht. Hierdurch ist ein gänzliches Herausziehen des Lichtschutzschiebers 270 aus dem Gehäuse 250 verhütet.

Gemäss Fig. 37 ist dem Lichtschutzschieber 270 ein Rückschubsperrorgan 275 in Gestalt eines kleinen Schwenkarmes zugeordnet, der um eine Achse 276 schwenkbar ist und unter dem Einfluss einer (nicht dargestellten) Feder steht, die bestrebt ist, den Schwenkarm 275 in den dargestellten Mittelstellung zu halten, aus der er nach der einen und der andern Seite hin verschwenkbar ist. An der dem Schwenkarm 275 benachbarten Längskante des Lichtschutzschiebers 270 befinden sich zwei Einkerbungen 278, von denen in Fig. 37 nur die eine sichtbar ist. Diese Einkerbungen 278 sind derart angeordnet, dass in dieselben das freie Ende des Schwenkarmes 275 eingreifen kann, wenn der Lichtschutzschieber 270 seine Schliesslage bzw. seine Offenlage einnimmt. Die Wirkungsweise des Schwenkarmes 270 ist grundsätzlich gleich wie jene des mit Bezug auf die Fig. 10 und 12 bis 14 beschriebenen Schwenkarmes 105, der dem Lichtschutzschieber 91 als Rückschubsperrorgan zugeordnet ist. Der Schwenkarm 275 gewährleistet, dass jede Bewegungsumkehr des Lichtschutzschiebers 270 sowohl beim Öffnen als auch beim Schliessen desselben unmöglich ist, solange der Lichtschutzschieber nicht vollständig in seine Offenlage bzw. in seine Schliesslage bewegt worden ist.

Ferner sind dem Lichtschutzschieber 270 zwei Verriegelungsorgane 280 und 281 zugeordnet, die je mit einer entsprechenden Kerbe 282 bzw. 283 des Lichtschutzschiebers in Eingriff treten können, um denselben in der Schliesslage zu sperren, solange in der Etage D keine Kassette 53 und in der Etage E kein Container 51 eingesetzt ist. Die Verriegelungsorgane 280 und 281 sind analog dem mit Bezug auf die Fig. 6, 10 und 11 beschriebenen Verriegelungsorgan 99 ausgebildet, und zwar derart, dass das Verriegelungsorgan 280 beim Einsetzen der Kassette 53 und das andere Verriegelungsorgan 281 beim Einsetzen des Containers 51 in eine unwirksame, d.h. den Lichtschutzschieber 270 freigebende Stellung bewegt wird.

Die Gebrauchs- und Wirkungsweise der Einrichtung gemäss den Fig. 34 bis 37 ist wie folgt:

Wenn der Photograph wünscht, belichtete Filmblätter aus einer oder mehreren Kassetten 53 zu entnehmen und bis zu ihrer Entwicklung unter Lichtabschluss zu verwahren, um die Kassetten erneut mit noch unbelichteten Filmblättern laden zu können, setzt er einen leeren Container 51 in den hierfür vorgesehenen Raum der unteren Etage E des Gehäuses 250 und eine zu entladene Kassette 53 in den entsprechenden Raum der oberen Etage D ein, wie in den Fig. 34 bis 36 veranschaulicht ist. Durch das Einsetzen des Containers und der Kassette werden die Verriegelungsorgane 280 und 281 automatisch in ihre unwirksamen Stellungen bewegt, bei denen die Sperrung des Lichtschutzschiebers 270 aufgehoben ist. Ebenfalls beim Einsetzen des Containers 51 und der Kassette 53 werden ihre Lichtschutzschieber 70 und 57 selbsttätig mittels der Kupplungszapfen 272 und 273 mit dem Lichtschutzschieber 270 gekuppelt. Dann lassen sich die drei Lichtschutzschieber 57, 70 und 270 zusammen in ihre Offenstellungen bewegen, wonach das belichtete Filmblatt unter dem Einfluss der Schwerkraft aus der Kassette 53 in den Container 51 fällt. Nachher schiebt man die Lichtschutzschieber 57, 70 und 270 in ihre Schliesslagen zurück, wonach die nunmehr leere Kassette 53 aus der Etage D entnommen und mittels der zuerst beschriebenen Einrichtung gemäss den Fig. 1 bis 33 erneut mit einem unbelichteten Filmblatt geladen werden kann.

Auf die beschriebene Weise können bei vollem Umgebungslicht die belichteten Filmblätter aus mehreren Kassetten nacheinander in einen und denselben Container umgefüllt werden, dem schliesslich die Filmblätter entnommen und der Entwicklung zugeführt werden.

In Fig. 38 ist ein Beispiel einer Einrichtung gezeigt, mit welcher es möglich ist, belichtete Filmblätter bei vollem Umgebungslicht aus einem Container in eine photographische Entwicklungsvorrichtung überzuführen. Die Einrichtung weist ein Gehäuse 290 aus drei sandwichartig übereinander angeordneten Etagen F, G und H auf. Die oberste Etage F und die mittlere Etage G sind praktisch gleich ausgebildet wie die Etagen A und B der zuerst mit Bezug auf die Fig. 1 bis 33 beschriebenen Einrichtung. Die untere Etage H ist ein Adapter, der ermöglicht, die Einrichtung mit einem Anschlussstück 291 am Beschickungseingang 292 der Entwicklungsvorrichtung lichtdicht zu verbinden. Im übrigen ist die Etage H weitgehend gleich wie die unterste Etage C der Einrichtung gemäss den Fig. 1 bis 33 ausgebildet, mit der Ausnahme, dass ein Raum zum Einsetzen einer Kassette fehlt. Statt dessen weist die Etage H eine durchgehende Ausnehmung 295 auf, die der Ausgabeöffnung 125 der Etage C entspricht und in gleicher Weise wie die genannte Ausgabeöffnung 125 einen gegenüber der Ausnehmung 90 der Etage C verdrehten Grundriss aufweist. Eine photographische Markierungseinrichtung, wie sie in der Etage B vorhanden ist und mit Bezug auf die Fig. 10 und 33 beschrieben wurde, kann in der Etage G ebenfalls vorgesehen sein, um die Filmblätter z.B. mit dem Entwicklungsdatum oder anderen mit der Entwicklung zusammenhängenden Angaben zu markieren. Zweckmässig ist aber die Markierungseinrichtung in der Etage G derart plaziert, dass die Markierungen an mindestens einer Stelle angebracht werden, die von jener verschieden ist, auf der die beim Laden der Kassetten erzeugten Markierungen erzeugt worden sind.

Die Gebrauchs- und Wirkungsweise der Einrichtung gemäss Fig. 38 ist kurz wie folgt:

Es sei vorausgesetzt, dass in der Ausnehmung 90 der Etage G kein einziges Filmblatt vorhanden ist. Der Lichtschutzschieber 91 an der oberen Mündung oder Eintrittsöffnung der Ausnehmung 90 ist in seiner Schliesslage gesperrt, solange kein Container 51 in den hierfür vorgesehenen Raum in der obersten Etage F eingesetzt ist. Durch das Einsetzen des Containers 51, der einen Stapel von belichteten Filmblättern enthält, wird die Sperre des Lichtschutzschiebers 91 aufgehoben, und letzterer wird mittels des Kupplungszapfens automatisch mit dem Lichtschutzschieber 70 des Containers gekuppelt. Wenn dann die beiden Lichtschutzschieber 70 und 91 zusammen geöffnet werden, fällt unter dem Einfluss der Schwerkraft der ganze Stapel von Filmblättern aus dem Container 51 in die Ausnehmung 90 der Etage G. Nach dem Schliessen der beiden Lichtschutzschieber 70 und 91 kann der leere Container aus der Etage F entnommen und gegebenenfalls einem anderen Verwendungszweck zugeführt werden. Durch Bewegen des Lichtschutzschiebers 116 der Etage H in seine Offenlage wird der als Vereinzelungsorgan dienenden Scheibe 112 eine Drehbewegung erteilt, durch welche das in der Durchbrechung 115 der Scheibe 112 liegende unterste Filmblatt mitgedreht wird und dann in die Durchlassöffnung 295 der Etage H fallen kann. Gleichzeitig erfolgt gegebenenfalls eine Markierung des genannten Filmblattes, unmittelbar bevor es in die Durchlassöffnung 292 fällt. Beim nachfolgenden Bewegen des Lichtschutzschiebers 116 in seine Schliesslage wird die Scheibe 112 in ihre Ausgangslage zurückgedreht, wonach das nächste Filmblatt des Stapels in die Durchbrechung 115 hineingleitet. Von der Durchlassöffnung 295 der Etage H fällt das abgetrennte und ausgegebene Filmblatt in den Beschickungseingang 292 der Entwicklungsvorrichtung. Durch erneutes Betätigen des Lichtschutzschiebers 116 lässt sich auf die beschriebene Weise das nächste Filmblatt in die Entwicklungsvorrichtung übergeben, wenn diese wieder aufnahmebereit ist.

In Fig. 39 ist eine vereinfachte Einrichtung gezeigt, mit welcher ermöglicht ist, unter völligem Lichtabschluss jeweils ein belichtetes Filmblatt unmittelbar aus einer Kassette 53 in eine Entwicklungsvorrichtung zu übergeben. Diese Einrichtung weist ein aus nur zwei sandwichartig übereinander angeordneten Etagen J und K bestehendes Gehäuse 300 auf. Die obere Etage J ist genau gleich ausgebildet wie die obere Etage D der Einrichtung gemäss den Fig. 34 bis 37 und ist demgemäss zur Aufnahme einer Kassette 53 bestimmt. Die untere Etage K des Gehäuses 300 ist ein Adapter, der ermöglicht, die Einrichtung mit einem Anschlussstück 291 am Beschickungseingang 292 der Entwicklungsvorrichtung lichtdicht zu verbinden. Die Etage K weist eine durchgehende Ausnehmung 31 auf, deren lichter Querschnitt nach Form und Grösse den Flächenabmessungen eines Filmblattes angepasst ist, wobei der Grundriss der Ausnehmung 301 mit jenem der Ausnehmung 56 der Kassette 53 übereinstimmt, wenn diese in die Etage J eingesetzt ist. Ferner ist die Etage K mit einem Lichtschutzschieber 302 versehen, der in eine die Ausnehmung 301 lichtdicht verschliessende Schliesslage und in eine die Mündung der Ausnehmung 301 vollständig freigebende Offenlage bewegbar ist. An dem aus Gehäuse 300 herausragenden Ende des Lichtschutzschiebers 301 ist ein Kupplungsstück 303 mit einem Kupplungszapfen 304 befestigt, der dazu bestimmt ist, mit der Bohrung 119 der Griffleiste 58 am Lichtschutzschieber 57 der Kassette 53 in Kupplungseingriff zu treten, wenn die Kassette in die Etage J eingesetzt wird. Bei dem vom Kupplungsstück 303 abgewandten Ende des Lichtschutzschiebers 302 ist an letzterem ein Anschlagnocken 304 befestigt, der in der Offenstellung des Lichtschutzschiebers 302 gegen eine Anschlagfläche 305 der Etage K stösst, wodurch vermieden ist, dass der Lichtschutzschieber 302 ganz aus dem Gehäuse 300 herausgezogen werden kann. Dem Lichtschutzschieber 302 ist ein (nicht dargestelltes) Verriegelungsorgan zugeordnet zum Sperren des Lichtschutzschiebers in seiner Schliesslage, solange keine Kassette 53 in die Etage J eingesetzt ist. Das erwähnte Verriegelungsorgan kann ähnlich wie das Verriegelungsorgan 99 (Fig. 6 und 10) der zuerst beschriebenen Einrichtung ausgebildet sein. Ferner ist dem Lichtschutzschieber 302 zweckmässig auch ein Rückschubsperrorgan zugeordnet, das z.B. wie der Schwenkarm 105 gemäss Fig. 10 ausgebildet ist und dazu dient, eine Bewegungsumkehr des Lichtschutzschiebers 302 sowohl beim Öffnen als auch beim Schliessen desselben zu verhindern, solange der Lichtschutzschieber nicht vollständig in seine Offenlage oder seine Schliesslage bewegt worden ist.

Die Gebrauchs- und Wirkungsweise der Einrichtung nach Fig. 39 ist kurz wie folgt:

Solange in die obere Etage J des Gehäuses 300 keine Kassette eingesetzt ist, bleibt der Lichtschutzschieber 302 in der Schliesslage gesperrt, wodurch jeglicher Lichteinfall in den Beschickungseingang 292 der Entwicklungsvorrichtung verhütet ist. Wenn der Photograph wünscht, das in einer Kassette 53 enthaltene belichtete Filmblatt der Entwicklungsvorrichtung zu übergeben, setzt er die Kassette in den dafür vorgesehenen Raum der oberen Etage J ein, wodurch automatisch die Sperre des Lichtschutzschiebers 302 entriegelt und mittels des Kupplungszapfens 304 der Lichtschutzschieber 302 mit dem Lichtschutzschieber 57 der Kassette 53 gekuppelt wird. Wenn dann die beiden Lichtschutzschieber 57 und 302 zusammen geöffnet werden, fällt unter dem Einfluss der Schwerkraft das Filmblatt aus der Kassette 53 durch die Ausnehmung 301 der Etage K hindurch unmittelbar in den Beschickungseinlass 292 der Entwicklungsvorrichtung. Nach dem Schliessen der beiden Lichtschutzschieber 57 und 91 lässt sich die leere Kassette 53 aus der Etage J entnehmen und mittels der zuerst beschriebenen Einrichtung erneut mit einem unbelichteten Filmblatt laden.

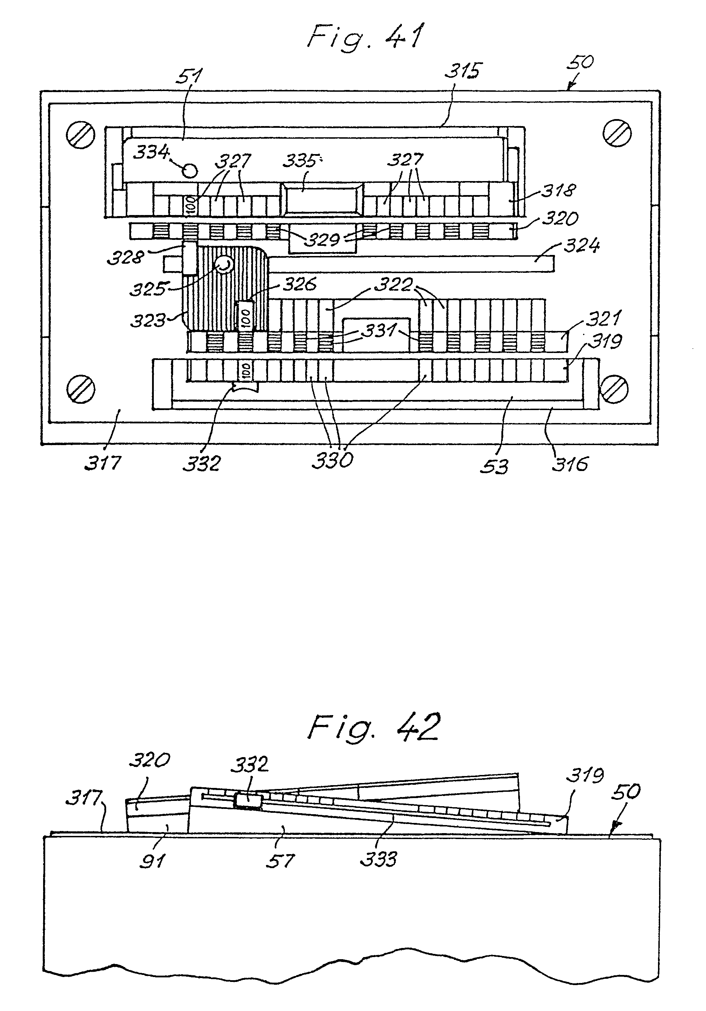

In Fig. 40 ist schematisiert eine weitere Einrichtung gezeigt, die ein aus drei sandwichartig übereinander angeordneten Etagen L, M und N bestehendes Gehäuse 310 aufweist. Die oberste Etage L ist praktisch gleich ausgebildet wie die mittlere Etage B der zuerst mit Bezug auf die Fig. 1 bis 33 beschriebenen Einrichtung. Die unterste Etage N hat praktisch die gleiche Ausbildung wie die untere Etage E der gemäss den Fig. 34 bis 37 beschriebenen Einrichtung und ist demgemäss zur Aufnahme eines Containers 51 mit nach oben gewandter Mündung seiner Ausnehmung 52 bestimmt. Die mittlere Etage M ist ähnlich der untersten Etage C der Einrichtung gemäss den Fig. 1 bis 33 und somit zur Aufnahme einer Kassette 53 ausgebildet, wobei jedoch ermöglicht ist, die Kassette wahlweise mit nach oben oder nach unten gewandter Mündung ihrer Ausnehmung 56 einzuschieben.

Die Gebrauchs- und Wirkungsweise der Einrichtung nach Fig. 40 ist wie folgt:

Der Photograph muss in einer Dunkelkammer oder sonstwie unter völligem Lichtabschluss den Lichtschutzschieber 91 an der oberen Mündung oder Eintrittsöffnung der Ausnehmung 90 der Etage L öffnen und dann einen Stapel unbelichteter Filmblätter in die Ausnehmung 90 einfüllen, wonach der Lichtschutzschieber 91 zu schliessen ist, wobei automatisch eine Verriegelung dieses Lichtschutzschiebers in der Schliesslage erfolgt, bis das letzte in der Ausnehmung 90 enthaltene Filmblatt auf die nachstehend beschriebene Weise in eine Kassette eingebracht worden ist. Alle weiteren Manipulationen der Einrichtung können bei vollem Umgebungslicht erfolgen. Eine leere Kassette 53, die mit einem unbelichteten Filmblatt geladen werden soll, wird in den hierfür vorgesehenen Raum der Etage M eingesetzt, und zwar derart, dass die Mündung der Ausnehmung 56 dieser Kassette nach oben gewandt ist. Durch das konkrete Einsetzen der Kassette wird die Sperre des Lichtschutzschiebers 116 unter der drehbaren Scheibe 112 entriegelt. Gleichzeitig wird der Lichtschutzschieber 57 der Kassette mit dem Lichtschutzschieber 116 gekuppelt. Dann lassen sich die beiden Lichtschutzschieber 57 und 116 gemeinsam betätigen, wodurch das unterste Blatt des Filmblatt-Stapels in der Ausnehmung 90 vom Stapel getrennt und in die Kassette 53 eingegeben wird. Nach dem Schliessen der beiden Lichtschutzschieber 57 und 116 kann man die nunmehr geladene Kassette 53 aus der Etage M entnehmen. Wenn der Photograph wünscht, ein belichtetes Filmblatt aus einer Kassette in einen Container 51 überzuführen, dann hat er die Kassette 53 in der Etage M derart einzusetzen, dass die Mündung der Ausnehmung 56 der Kassette nach unten gewandt ist. Ferner muss der Photograph den Container 51 in den hierfür vorgesehenen Raum der untersten Etage N einsetzen. Durch das korrekte Einsetzen der Kassette 53 und des Containers 51 wird der dazwischen angeordnete Lichtschutzschieber 270 entriegelt und mit dem Lichtschutzschieber 57 der Kassette wie auch mit dem Lichtschutzschieber 70 des Containers gekuppelt. Durch ein nachfolgendes Öffnen der drei miteinander gekuppelten Lichtschutzschieber wird erreicht, dass das belichtete Filmblatt aus der Kassette 53 in den Container 51 fällt. Nach dem Schliessen der drei Lichtschutzschieber ist das Filmblatt im Container 51 gegen Lichteinfall geschützt. Die nunmehr leere Kassette 53 kann nachher gewendet und in der vorher beschriebenen Weise erneut mit einem unbelichteten Filmblatt geladen werden.

Aus der vorstehenden Beschreibung ist ersichtlich, dass verschiedene Kombinationsmöglichkeiten der unterschiedlichen Etagen A bis N möglich sind, um jeweils eine den Bedürfnissen angepasste Einrichtung zum Handhaben von lichtempfindlichem Blattmaterial zu schaffen. So kann es z.B. sinnvoll sein, die in den Fig. 1 bis 33 gezeigte Einrichtung, welche die Etagen A, B und C aufweist, mit der Einrichtung gemäss den Fig. 34 bis 37 zu einer Einheit zusammenzubauen, die aus den fünf Etagen A bis E besteht. Eine andere zweckmässige Ausführungsvariante kann die drei Etagen L, M und N gemäss Fig. 40 aufweisen und dazu noch eine darüber angeordnete Etage A zur Aufnahme eines Containers 51 mit nach unten gewandter Mündung seiner Ausnehmung 52, so dass dann das Einbringen eines Stapels von unbelichteten Filmblättern in die Ausnehmung der Etage L nicht in der Dunkelkammer erfolgen muss, sondern bei vollem Umgebungslicht vorgenommen werden kann.

In den Fig. 41 und 42 ist eine dem ersten Ausführungsbeispiel (vergleiche insbesondere Fig. 1 bis 4) ähnliche Ausführungsform einer erfindungsgemässen Einrichtung zum Laden von Kassetten für eine photographische Fachkamera mit unbelichteten Filmblättern veranschaulicht. Wie beim ersten Ausführungsbeispiel weist die Einrichtung gemäss Fig. 41 und 42 ein Gehäuse 50 auf, in welches die (nicht sichtbare) Separiervorrichtung integriert ist und in das oben ein Container 51 und unten eine Kassette 53 nach Art von Schubladen einschiebbar sind. Die mit Einschiebeöffnungen 315 und 316 für den Container 51 und die Kassette 53 versehene vordere Aussenfläche 317 des Gehäuses 50 ist eben. Von der gleichen Aussenfläche 317 her sind sämtliche Lichtschutzschieber betätigbar, nämlich die Lichtschutzschieber des Containers 51 und der Kassette 53 wie auch die beiden Lichtschutzschieber an der Eintrittsöffnung des Stauraumes der Separiervorrichtung bzw. an der Ausgabeöffnung der Separiervorrichtung. Die Lichtschutzschieber selbst sind in Fig. 41 nicht sichtbar, wohl aber an den Lichtschutzschiebern angebrachte Griffleisten 318, 319, 320 und 321, die sich jeweils über die ganze Breite des betreffenden Lichtschutzschiebers erstrecken. In der Unteransicht gemäss Fig. 42 sind der Lichtschutzschieber 57 der Kassette 53 und der dem Stauraum der Separiervorrichtung zugeordnete Lichtschutzschieber 91 zu sehen. Durch den Lichtschutzschieber 57 ist in Fig. 42 der dazu parallele Lichtschutzschieber (116 beim ersten Beispiel) an der Ausgabeöffnung der Separiervorrichtung verdeckt, und in der gleichen Figur ist durch den Lichtschutzschieber 91 des Stauraumes der Separiervorrichtung der dazu parallele Lichtschutzschieber (70 beim ersten Beispiel) des Containers verdeckt.

Zwischen den beiden Lichtschutzschiebern (91 und 116) der Separiervorrichtung ist an der Aussenfläche 317 des Gehäuses 50 eine in Richtung der Breitenabmessung der Lichtschutzschieber verlaufende Reihe von Emulsionsdatenfeldern 322 angeordnet, deren Zweck und Bedeutung später erläutert werden. Entlang der genannten Reihe ist ein Indexierläufer 323 verschiebbar, der auf nicht näher dargestellte Weise mittels einer Führungsnut 324 geführt ist. Ebenfalls nicht dargestellte Brems- oder Sperrorgane sorgen unter dem Einfluss einer Feder dafür, dass der Indexierläufer 323 in der jeweils eingestellten Position gegen unbeabsichtigtes Verschieben gesichert ist. Mittels eines Druckknopfes 325 lässt sich die erwähnte Bremse oder Sperre lösen, um den Indexierläufer in eine andere Position bringen zu können. Der Indexierläufer 323 weist einen als Zeigervorrichtung dienenden Ausschnitt 326 auf, durch welchen hindurch eines der Emulsionsdatenfelder 322 sichtbar ist. Es leuchtet ein, dass der Indexierläufer 323 nach Belieben in bezug auf jedes Emulsionsdatenfeld 322 einstellbar ist.

Die Griffleiste 318 des Lichtschutzschiebers des Containers 51 ist mit einer zweiten Reihe von Emulsionsdatenfeldern 327 versehen, die grundsätzlich gleich wie die Datenfelder 322 angeordnet sind. Am Indexierläufer 323 ist eine zweite Zeigervorrichtung 328 vorhanden, die auf eines der Emulsionsdatenfelder 327 ausgerichtet ist, wobei in jeder Position des Indexierläufers die durch den Ausschnitt 326 und die Zeigervorrichtung 328 angepeilten Emulsionsdatenfelder 322 und 327 einander entsprechen. Zwischen der Zeigervorrichtung 328 und der die Emulsionsdatenfelder 327 tragenden Griffleiste 318 befindet sich die Griffleiste 320 des Lichtschutzschiebers 91. Um dennoch eine zweifelfreie Zuordnung der Zeigervorrichtung 328 zu den Emulsionsdatenfeldern 327 zu ermöglichen, ist die dazwischenliegende Griffleiste 320 mit Hilfsmarkierungen 329 versehen, die den Emulsionsdatenfeldern 327 zugeordnet sind und erlauben, den jeweiligen Zwischenraum zwischen der Zeigervorrichtung 328 und dem gegenüberliegenden Emulsionsdatenfeld 327 visuell zu überbrücken.

An der Griffleiste 319 des Lichtschutzschiebers 57 der Kassette 53 ist eine dritte Reihe von Emulsionsdatenfeldern 330 angeordnet, und zwar wieder grundsätzlich gleich wie die Emulsionsdatenfelder 322. Der Ausschnitt 326 des Indexierläufers 323 ist nicht nur in bezug auf eines der Emulsionsdatenfelder 322, sondern zugleich auch auf das jeweils entsprechende Emulsionsdatenfeld 330 ausgerichtet. Zwischen dem Indexierläufer 323 und der die Emulsionsdatenfelder 330 tragenden Griffleiste 319 befindet sich die Griffleiste 321. Letztere ist mit einer Reihe von Hilfsmarkierungen 331 versehen, die den Emulsionsdatenfeldern 330 zugeordnet sind und erlauben, den jeweiligen Zwischenraum zwischen dem als Anzeigevorrichtung dienenden Ausschnitt 326 des Indexierläufers 323 und dem gegenüberliegenden Emulsionsdatenfeld 330 visuell zu überbrücken. Ein kleiner Markierungsläufer 332 ist an der in Fig. 41 unteren Seite der Griffleiste 319 des Lichtschutzschiebers 57 der Kassette 53 mittels einer Führungsnut 333 (Fig. 42) verschiebbar angeordnet. Der Markierungsläufer 332 lässt sich in bezug auf ein beliebiges der Emulsionsdatenfelder 330 ausrichten, um das dem Ausschnitt 326 des Indexierläufers 323 jeweils gegenüberliegende Emulsionsdatenfeld 330 zu markieren. Ein nicht dargestelltes, unter dem Einfluss einer Feder stehendes Bremsorgan sichert den Markierungsläufer 332 in seiner jeweils eingestellten Position gegen unbeabsichtigtes Verschieben.

Der Zweck und die Gebrauchsweise der mit Bezug auf die Fig. 41 und 42 beschriebenen Ausgestaltung sind wie folgt:

Die im Container 51 angelieferten photographischen Filmblätter haben alle eine lichtempfindliche Emulsion mit bestimmten Daten, wie z.B. Empfindlichkeit, schwarz-weiss oder farbig, negativ oder positiv, Farbtemperatur. Die Emulsionsdatenfelder 322, 327 und 330 sind den verschiedenen gebräuchlichen Emulsionstypen zugeordnet und entsprechend bezeichnet, z.B. durch Zahlen, Farbe und/oder Codezeichen. Auf geeignete Weise, z.B. durch einen auf dem Container 51 angeklebten Markierungspunkt 334, ist dasjenige Emulsionsdatenfeld 327 ausgezeichnet, das für die Emulsion der im Container enthaltenen Filmblätter zutrifft. In einem zusätzlichen Beschriftungsfeld 335 kann auch das Fabrikat der Filmblätter angegeben sein. Die Auszeichnung des jeweils zutreffenden Emulsionsdatenfeldes 327, z.B. mittels des Markierungspunktes 334, erfolgt zweckmässig jeweils beim Füllen des Containers 51, sei dies im Herstellerwerk der Filmblätter oder in der Dunkelkammer des Photographen. Nach dem Einsetzen des Containers 51 in das Gehäuse 50 stellt der Photograph bei geschlossenen Lichtschutzschiebern den Indexierläufer 323 in eine solche Position, dass seine obere Anzeigevorrichtung 328 dem ausgezeichneten Emulsionsdatenfeld 327 an der Griffleiste 318 des Lichtschutzschiebers des Containers gegenübersteht, wie Fig. 41 zeigt. Dann kommt von selbst das dem ausgezeichneten Emulsionsdatenfeld 327 entsprechende Emulsionsdatenfeld 322 in den Ausschnitt 326 des Indexierläufers 323 zu liegen. Damit sind die Emulsionsdaten der im Container 51 enthaltenen Filmblätter auf das Gehäuse 50 übertragen und festgehalten. Durch gleichzeitiges Ziehen und nachfolgendes Zurückschieben der mit den Griffleisten 318 und 320 versehenen Lichtschutzschieber lassen sich die Filmblätter vom Container 51 in den Stauraum der Separiervorrichtung überführen, wie mit Bezug auf das erste Beispiel beschrieben. Wenn nachher der entleerte Container 51 aus dem Gehäuse 50 herausgenommen wird, bleiben die Emulsionsdaten der in den Stauraum der Separiervorrichtung überführten Filmblätter im Ausschnitt 326 des Indexierläufers 323 gespeichert.

Wenn nachher oder später der Photograph einzelne Filmblätter in photographische Kassetten 53 abfüllen will, schiebt er die Kassetten eine nach der andern in den hierfür vorgesehenen Raum des Gehäuses 50 und bringt jeweils den Markierungsläufer 332 an der Griffleiste 319 des Lichtschutzschiebers 57 der zu ladenden Kassette in die der Ausnehmung 326 des Indexierläufers 323 gegenüberliegende Position. Hierdurch wird dasjenige Emulsionsdatenfeld 330 markiert, für welches die Emulsionsdaten der in der Separiervorrichtung liegenden Filmblätter zutreffen. Schliesslich überführt der Photograph durch gleichzeitiges Ziehen und nachfolgendes Zurückschieben der mit den Griffleisten 319 und 321 versehenen Lichtschutzschieber ein einzelnes Filmblatt in die Kassette 53. An der aus dem Gehäuse 50 herausgenommenen Kassette 53 kann der Photograph jederzeit wieder erkennen, welche Emulsion das in die Kassette geladene Filmblatt aufweist, da der Markierungsläufer 332 demjenigen Emulsionsdatenfeld 330 gegenübersteht, auf welches die Emulsionsdaten des Filmblattes zutreffen.

Somit ist praktisch gewährleistet, dass die Emulsionsdaten der mit der beschriebenen Einrichtung gehandhabten Filmblätter vom Container 51 bis in die Kassetten 53 fehlerfrei übertragen und an der Kassette mittels des Markierungsläufers 332 und dem jeweils gegenüberliegenden Emulsionsdatenfeld 330 festgehalten oder gespeichert werden.

In den Reihen der Emulsionsdatenfelder 322, 327 und 330 können zweckmässig auch einige blanke, d.h. leere Felder vorhanden sein, die vom Photographen individuell beschriftet werden können. Die Reihe der Emulsionsdatenfelder können durch vorgedruckte Klebestreifen gebildet sein, die im Bedarfsfall ausgewechselt werden können, z.B. wenn neue photographische Materialien mit bisher unüblichen Emulsionsdaten auf den Markt gelangen.

Bei allen beschriebenen und dargestellten Ausführungsbeispielen liegen die Blätter des zu handhabenden photographischen Blattmaterials waagrecht, und ihr Transport unter dem Einfluss der Schwerkraft innerhalb der Einrichtungen erfolgt in vertikaler Richtung, d.h. in einer Richtung, die rechtwinklig zur Ebene der einzelnen Blätter steht. Es ist aber durchaus möglich, die Einrichtung derart auszubilden, dass die Bewegungsrichtung der Blätter mit der Ebene der einzelnen Blätter einen Winkel im Bereich von 30° bis 90°, vorzugsweise von 75° bis 90°, einschliesst.

In den beschriebenen Ausführungsbeispielen von Einrichtungen mit einer Separiervorrichtung 55 ist das Vereinzelungsorgan der Separiervorrichtung als drehbare Scheibe 112 ausgebildet, deren Drehachse 114 durch die Mitte ihrer Durchbrechung 115 verläuft. Es ist aber auch möglich, die Drehachse der als Vereinzelungsorgan dienenden Scheibe exzentrisch anzuordnen, um dadurch den Antriebshebelarm zu vergrössern und die benötigte Antriebskraft zu verringern. Anstatt drehbar kann die als Vereinzelungsorgan dienende Scheibe 112 z.B. in Richtung einer Diagonalen ihrer Durchbrechung 115 ein wenig verschiebbar und zurückschiebbar sein. In diesem Fall ist dann die Ausgabeöffnung 125 gegenüber dem Grundriss der Ausnehmung 90 nicht verdreht, sondern in der Verschieberichtung der Scheibe 112 versetzt.

## Patentansprüche

1. Einrichtung zum Handhaben von lichtempfindlichem photographischem Blattmaterial bei Umgebungslicht, mit einer Separiervorrichtung zum Trennen jeweils eines einzelnen Blattes von einem Stapel aus mehreren Blättern gleicher Form und Grösse und zum Übergeben des abgetrennten Blattes in eine zum Anbringen an einer photographischen Kamera bestimmte Kassette oder in einen Beschickungseinlass einer photographischen Entwicklungsvorrichtung, wobei die Separiervorrichtung eine Eintrittsöffnung für die Zulieferung von Blattmaterial und eine Ausgabeöffnung für die Ausgabe jeweils eines einzelnen Blattes aufweist und mit einem zwischen der Eintrittsöffnung und der Ausgabeöffnung angeordneten beweglichen Vereinzelungsorgan sowie mit Verbindungsmitteln versehen ist, welche erlauben, die Ausgabeöffnung der Separiervorrichtung mit der Kassette oder mit einem Anschlussstück am Beschickungseinlass der Entwicklungsvorrichtung lösbar und gegen Umgebungslicht abgeschirmt zu verbinden, dadurch gekennzeichnet, dass die Separiervorrichtung (55) zwischen ihrer Eintrittsöffnung und dem Vereinzelungsorgan (112) einen Stauraum (90) für einen Stapel des Blattmaterials aufweist, dass die Eintrittsöffnung des Stauraumes (90) der Separiervorrichtung (55) mit einem Verschlussorgan (91) versehen ist, das in eine die Eintrittsöffnung lichtdicht verschliessende Schliesslage und in eine die Eintrittsöffnung gänzlich freigebende Offenlage bewegbar ist, dass bei dem Vereinzelungsorgan (112) der Separiervorrichtung (55) Auflageflächen (150, 151) zum Abstützen von Randpartien des jeweils untersten Blattes des Stapels vorhanden sind, dass die Separiervorrichtung (55) in den Stauraum (90) hineinragende Niederhalteorgane (155) zum Andrücken des Stapels an die Auflageflächen (150, 151) aufweist, dass jedes der Niederhalteorgane (155) aus seiner Andrückstellung in eine unwirksame Stellung bewegbar ist, bei welcher es sich ausserhalb des Stauraumes (90) befindet, um das Einbringen des Stapels in den Stauraum zu ermöglichen, und dass zum Bewegen der Niederhalteorgane (155) in ihre Andrückstellung bzw. in ihre unwirksame Stellung Antriebsvorrichtungen (157-174) vorhanden sind, die durch das der Eintrittsöffnung des Stauraumes (90) zugeordnete Verschlussorgan (91) steuerbar sind, derart dass die Niederhalteorgane (155) jeweils beim Bewegen des Verschlussorgans (91) in seine Offenstellung selbsttätig ihre unwirksame Stellung und beim Bewegen des Verschlussorgans (91) in seine Schliesslage selbsttätig ihre Andrückstellung einnehmen.

2. Einrichtung nach Anspruch 1, dadurch gekennzeichnet, dass die Eintrittsöffnung, der Querschnitt des Stauraumes (90) und die Ausgabeöffnung (125) der Separiervorrichtung (55) in bezug auf Form und Grösse den Flächenabmessungen eines einzelnen Blattes des Stapels angepasst sind und das Blattmaterial unter dem Einfluss der Schwerkraft von der Eintrittsöffnung des Stauraumes (90) zur Ausgabeöffnung (125) durch die Separiervorrichtung (55) hindurch bewegbar ist in einer Richtung, die mit der Ebene der einzelnen Blätter einen Winkel im Bereich von 30° bis 90°, vorzugsweise von 75° bis 90°, einschliesst.

3. Einrichtung nach Anspruch 1 oder 2, dadurch gekennzeichnet, dass die Separiervorrichtung (55) mindestens einen um eine Achse (157) schwenkbaren Steuerhebel (182) mit einem als Tastfinger (183) ausgebildeten freien Ende aufweist, welches dazu bestimmt ist, unter dem Einfluss einer Feder (184) auf dem jeweils obersten Blatt des im Stauraum (90) liegenden Stapels aufzuliegen und die Höhe des Stapels wie auch das Fehlen eines Blattes im Stauraum zu erfühlen, dass mindestens ein in und ausser Wirkungslage bewegbares Verriegelungsorgan (190) vorhanden ist, welches in seiner Wirkungslage das der Eintrittsöffnung des Stauraumes (90) zugeordnete Verschlussorgan (91) in Schliesslage sperrt und durch den Steuerhebel (182) ausser Wirkungslage bringbar ist, um das Öffnen des Verschlussorgans (91) an der Eintrittsöffnung des Stauraumes (90) zu ermöglichen, wenn der Tastfinger (183) das Fehlen eines Blattes im Stauraum (90) feststellt.

4. Einrichtung nach Anspruch 3, dadurch gekennzeichnet, dass das Verriegelungsorgan (190) unter dem Einfluss der Schwerkraft in seine Wirkungslage bewegbar ist, wenn das der Eintrittsöffnung des Stauraumes (90) zugeordnete Verschlussorgan (91) sich in Schliesslage befindet und die Separiervorrichtung im Raum derart orientiert ist, dass der Stauraum (90) oberhalb der Ausgabeöffnung (125) liegt, und dass bei umgekehrter Orientierung der Separiervorrichtung (55) im Raum das Verriegelungsorgan (190) unter dem Einfluss der Schwerkraft ausser Wirkungslage bewegbar ist, um das Öffnen des Verschlussorgans (91) an der Eintrittsöffnung des Stauraumes (90) zu ermöglichen zwecks Entnahme des ganzen Stapels aus dem Stauraum (90) der Separiervorrichtung.

5. Einrichtung nach einem der Ansprüche 1 bis 4, dadurch gekennzeichnet, dass mindestens ein Container (51) für einen Stapel des photographischen Blattmaterials vorhanden ist und eine lichtdicht verschlossene, offenbare Aussnehmung (52) aufweist, welche in bezug auf Form und Grösse den Flächenabmessungen eines einzelnen Blattes des Stapels angepasst ist, dass Verbindungsmittel (50) vorhanden sind, die erlauben, den Container (51) mit der Separiervorrichtung (55) lösbar und lichtdicht derart zu verbinden, dass die Ausnehmung (52) des Containers (51) mit der Eintrittsöffnung des Stauraumes (90) der Separiervorrichtung (55) übereinstimmend kommuniziert, um den Übertritt von Blattmaterial aus dem Container (51) in den Stauraum (90) der Separiervorrichtung zu ermöglichen.

6. Einrichtung nach Anspruch 5, dadurch gekennzeichnet, dass das Verschlussorgan an der Eintrittsöffnung des Stauraumes (90) der Separiervorrichtung (55) ein Lichtschutzschieber (91) ist und dass ein Verriegelungsorgan (99) vorhanden ist, welches diesen Lichtschutzschieber (91) jeweils in seiner Schliesslage sperrt, solange der Container (51) nicht an die Eintrittsöffnung des Stauraumes (90) angeschlossen ist.

7. Einrichtung nach Anspruch 6, dadurch gekennzeichnet, dass die Ausnehmung (52) des Containers (51) ebenfalls mit einem Lichtschutzschieber (70) versehen ist, der in eine die Ausnehmung (52) lichtdicht verschliessende Schliesslage und in eine die Ausnehmung (52) gänzlich freigebende Offenlage bewegbar ist, und dass die der Eintrittsöffnung des Stauraumes (90) der Separiervorrichtung (55) und der Ausnehmung (52) des Containers (51) zugeordneten zwei Lichtschutzschieber (91, 70) aneinander angepasste Kupplungsorgane (92-95) aufweisen, die jeweils selbsttätig miteinander in Kupplungseingriff treten, wenn der Container (51) mit der Separiervorrichtung (55) verbunden wird, so dass dann die genannten zwei Lichtschutzschieber (91, 70) zwangsweise gleichzeitig und gleichsinnig zu betätigen sind.

8. Einrichtung nach einem der Ansprüche 1 bis 7, dadurch gekennzeichnet, dass der Ausgabeöffnung (125) der Separiervorrichtung (55) ein Lichtschutzschieber (116) zugeordnet ist, der in eine die Ausgabeöffnung (125) lichtdicht verschliessende Schliesslage und in eine die Ausgabeöffnung gänzlich freigebende Offenlage bewegbar ist, und dass zur Betätigung des Vereinzelungsorgans (112) der Separiervorrichtung (55) Antriebsvorrichtungen (130-146) vorhanden sind, die durch den der Ausgabeöffnung (125) zugeordneten Lichtschutzschieber (116) derart steuerbar sind, dass jeweils das Öffnen des genannten Lichtschutzschiebers (116) eine Betätigung des Vereinzelungsorgans (112) zum Ausgeben eines einzelnen Blattes des Blattmaterials und jeweils das Schliessen des Lichtschutzschiebers (116) die Rückführung des Vereinzelungsorgans (112) in seine Ausgangslage zur Folge hat.

9. Einrichtung nach Anspruch 8, dadurch gekennzeichnet, dass ein Verriegelungsorgan (210) vorhanden ist, welches den der Ausgabeöffnung (125) der Separiervorrichtung (55) zugeordneten Lichtschutzschieber (116) jeweils in seiner Schliesslage sperrt, solange an die Ausgabeöffnung (125) nicht eine Kassette (53) oder gegebenenfalls das Anschlussstück einer Entwicklungsvorrichtung angeschlossen ist.

10. Einrichtung nach Anspruch 8 oder 9, dadurch gekennzeichnet, dass eine Ausnehmung (56) der Kassette (53) bzw. eine Durchlassöffnung des Anschlussstückes der Entwicklungsvorrichtung in bezug auf Form und Grösse an die Flächenabmessungen eines einzelnen Blattes des Blattmaterials angepasst und mit einem Lichtschutzschieber (57) versehen ist, der in eine die Ausnehmung (56) bzw. die Durchlassöffnung lichtdicht verschliessende Schliesslage und in eine die Ausnehmung (56) bzw. die Durchlassöffnung gänzlich freigebende Offenlage bewegbar ist, und dass die der Ausgabeöffnung (125) der Separiervorrichtung (55) und der Ausnehmung (56) der Kassette (53) bzw. der Durchlassöffnung des Anschlussstückes zugeordneten zwei Lichtschutzschieber (116, 57) aneinander angepasste Kupplungsorgane (58, 117-119) aufweisen, die jeweils selbsttätig miteinander in Kupplungseingriff treten, wenn an die Ausgabeöffnung (125) der Separiervorrichtung (55) die Kassette (53) bzw. das Anschlussstück angeschlossen wird, so dass dann die genannten zwei Lichtschutzschieber (116, 57) zwangsweise gleichzeitig und gleichsinnig zu betätigen sind.

11. Einrichtung nach einem der Ansprüche 8 bis 10, dadurch gekennzeichnet, dass das Vereinzelungsorgan (112) der Separiervorrichtung (55) eine ebene Scheibe ist, deren Dickenabmessung etwa gleich der Dicke eines einzelnen Blattes des Stapels ist, und die eine Durchbrechung (115) zur Aufnahme des jeweils vom Stapel zu trennenden untersten Blattes aufweist und in bezug auf den Stauraum (90) deplazierbar ist zum Zwecke der Trennung des untersten Blattes von dem Stapel und der Überführung des abgetrennten Blattes in die Ausgabeöffnung (125) der Separiervorrichtung, dass die Durchbrechung (115) des Vereinzelungsorgans (112) und der Stauraum (90) der Separiervorrichtung (55) in Durchgangsrichtung betrachtet nach Form und Grösse im wesentlichen übereinstimmen, und dass der der Ausgabeöffnung (125) der Separiervorrichtung (55) zugeordnete Lichtschutzschieber (116) unmittelbar an die vom Stauraum (90) abgewandte Unterseite des Vereinzelungsorgans (112) anliegend verschiebbar gelagert ist und in seiner Schliesslage ausser der Ausgabeöffnung (125) auch die Durchbrechung (115) des Vereinzelungsorgans (112) vollständig und lichtdicht verschliesst und gleichzeitig eine Stütze für das jeweils unterste Blatt des sich im Stauraum (90) befindenden Stapels bildet.

12. Einrichtung nach den Ansprüchen 3 und 8, dadurch gekennzeichnet, dass der den Tastfinger (183) aufweisende Steuerhebel (182) mit einem Sperrnocken (183) versehen ist, der beim Fehlen eines Blattes im Stauraum (90) der Separiervorrichtung (55) mit einem Anschlag (194) an dem der Ausgabeöffnung (125) zugeordneten Lichtschutzschieber (116) in Eingriff gelangt, wenn dieser Lichtschutzschieber (116) seine Schliesslage einnimmt, so dass durch den Sperrnocken (183) und den Anschlag (194) der Lichtschutzschieber (116) in seiner Schliesslage gesperrt ist.

13. Einrichtung nach den Ansprüchen 6 und 8, dadurch gekennzeichnet, dass zumindest einem der beiden Lichtschutzschieber (91, 116) der Separiervorrichtung (55) ein Rückschubsperrorgan (105; 201) zugeordnet ist, durch welches eine Bewegungsumkehr des betreffenden Lichtschutzschiebers (91; 116) sowohl beim Öffnen als auch beim Schliessen desselben verhindert ist, solange der Lichtschutzschieber nicht vollständig in seine Offenlage bzw. in seine Schliesslage bewegt ist.

14. Einrichtung nach Anspruch 8 oder 9, dadurch gekennzeichnet, dass dem Lichtschutzschieber (116) der Ausgabeöffnung (125) der Separiervorrichtung (55) ein Verriegelungsorgan (210) zugeordnet ist, das unter dem Einfluss eines Steuergliedes (214) steht, welches durch eine mit der Ausgabeöffnung (125) der Separiervorrichtung (55) verbundene Kassette (53) betätigbar ist, derart dass nach einem einmaligen Öffnen und Schliessen des der Ausgabeöffnung (125) zugeordneten Lichtschutzschiebers (116) das Verriegelungsorgan (210) den Lichtschutzschieber (116) der Ausgabeöffnung (125) in Schliesslage sperrt, bis die Kassette (53) von der Separiervorrichtung (55) getrennt und eine andere Kassette angeschlossen ist.

15. Einrichtung nach den Ansprüchen 7 und 10, dadurch gekennzeichnet, dass die Separiervorrichtung (55) in ein Gehäuse (50) integriert ist, in welches der Container (51) und die Kassette (53) nach Art von Schubladen an der gleichen Aussenseite des Gehäuses einschiebbar sind, und dass sowohl die Lichtschutzschieber (91, 116) der Separiervorrichtung (55) als auch die Lichtschutzschieber (70, 57) des Containers (51) und der Kassette (53) von der genannten Aussenseite des Gehäuses (50) her betätigbar sind.

16. Einrichtung nach Anspruch 15, dadurch gekennzeichnet, dass das Gehäuse (50) aus mehreren sandwichartig übereinandergeschichteten Gehäuseteilen (A, B, C) zusammengesetzt ist.

17. Einrichtung nach einem der Ansprüche 1 bis 16, dadurch gekennzeichnet, dass innere Begrenzungsflächen des Stauraumes (90) und/oder der Eintrittsöffnung und/oder der Ausgabeöffnung (125) der Separiervorrichtung (55) mit Nuten (90A) versehen sind, die im wesentlichen in der Fallrichtung der Blätter des Stapels verlaufen.

18. Einrichtung nach einem der Ansprüche 5 bis 17, dadurch gekennzeichnet, dass ein Verbindungsstück (250; 300) vorhanden ist, durch das eine von der Ausgabeöffnung (125) der Separiervorrichtung (55) getrennte Kassette (53) und ein von der Eintrittsöffnung des Stauraumes (90) der Separiervorrichtung getrennter Container (51) oder ein Anschlussstück (291) am Beschickungseingang einer Entwicklungsvorrichtung sandwichartig und lichtdicht miteinander verbindbar sind in der Weise, dass die Ausnehmungen (56, 52) der Kassette (53) und des Containers (51) bzw. eine Durchlassöffnung des Anschlussstückes (291) einander zugewandt und miteinander in Übereinstimmung sind, und dass das Verbindungsstück (250) eine in Form und Grösse mit den Mündungen der Ausnehmung (56) der Kassette (53) im wesentlichen übereinstimmende Durchbrechung (253, 254; 253, 301) aufweist, durch welche hindurch ein Blatt aus der Kassette (53) in den Container (51) bzw. das Anschlussstück (291) unter dem Einfluss der Schwerkraft überführbar ist.

19. Einrichtung nach Anspruch 18, dadurch gekennzeichnet, dass die Ausnehmung (56) der Kassette (53) und die Ausnehmung (52) des Containers (51) oder die Durchlassöffnung des Anschlussstückes (291) je mit einem Lichtschutzschieber (57, 70) versehen sind, der in eine die betreffende Ausnehmung bzw. Durchlassöffnung lichtdicht verschliessende Schliesslage und in eine die Ausnehmung bzw. Durchlassöffnung gänzlich freigebende Offenlage bewegbar ist, und dass Kupplungsorgane vorhanden sind, durch welche

die Lichtschutzschieber (57, 70) der Kassette (53) und des Containers (51) bzw. des Anschlussstükkes selbsttätig miteinander kuppelbar sind, wenn die Kassette und der Container bzw. das Anschlussstück mit dem Verbindungsstück (250; 300) verbunden werden, so dass die gekuppelten Lichtschutzschieber (57, 70) dann zwangsweise gleichzeitig und gleichsinnig zu betätigen sind.

20. Einrichtung nach Anspruch 18, dadurch gekennzeichnet, dass die Ausnehmungen (56, 52) der Kassette (53) und des Containers (51) wie auch die Durchlassöffnung (253, 254; 253, 301) des Verbindungsstückes (250; 300) und gegebenenfalls des Anschlussstückes (291) je mit einem Lichtschutzschieber (57, 70, 270, 302) versehen sind, der in eine die betreffende Ausnehmung oder Durchlassöffnung lichtdicht verschliessende Schliesslage und in eine die betreffende Ausnehmung oder Durchlassöffnung gänzlich freigebende Offenlage bewegbar ist, und dass Kupplungsorgane (94, 95, 58, 119, 271-273; 58, 119, 303, 304) vorhanden sind, durch welche der Lichtschutzschieber (270, 302) der Durchlassöffnung des Verbindungsstückes (250; 300) selbsttätig mit dem Lichtschutzschieber (57) der Kassette (53) und gegebenenfalls dem Lichtschutzschieber (70) des Containers (51) bzw. des Anschlussstückes kuppelbar ist, wenn die Kassette (53) und gegebenenfalls der Container bzw. das Anschlussstück mit dem Verbindungsstück (250; 300) verbunden werden, so dass dann die gekuppelten Lichtschutzschieber zwangsläufig gleichzeitig und gleichsinnig zu betätigen sind.

21. Einrichtung nach Anspruch 20, dadurch gekennzeichnet, dass dem Lichtschutzschieber (270; 302) der Durchlassöffnung (253, 254; 253, 301) des Verbindungsstückes (250; 300) mindestens ein Rückschubsperrorgan (275) zugeordnet ist, durch welches eine Bewegungsumkehr des Lichtschutzschiebers sowohl beim Öffnen als auch beim Schliessen desselben verhindert ist, solange der Lichtschutzschieber nicht vollständig in seine Offenlage bzw. in seine Schliesslage bewegt ist.

22. Einrichtung nach einem der Ansprüche 18 bis 21, dadurch gekennzeichnet, dass das Verbindungsstück (250; 300) ein Gehäuse ist, in welches die Kassette (53) und gegebenenfalls der Container (51) nach Art von Schubladen einschiebbar sind.

23. Einrichtung nach den Ansprüchen 15 und 18, dadurch gekennzeichnet, dass das Verbindungsstück ein Teil des die Separiervorrichtung enthaltenden Gehäuses ist und letzteres derart ausgebildet ist, dass in dasselbe der Container (51) und die Kassette (53) nach Art von Schubladen einschiebbar sind, und zwar so, dass die Kassette oberhalb des Containers zu liegen kommt.

24. Einrichtung nach einem der Ansprüche 1 bis 23, dadurch gekennzeichnet, dass die Separiervorrichtung (55) mit mindestens einer Markierungseinrichtung (225) zum Anbringen von Markierungen an mindestens einer Randpartie des jeweils untersten Blattes des im Stauraum (90) der Separiervorrichtung (55) liegenden Stapels versehen ist, wobei die Markierungseinrichtung beim Betätigen des Vereinzelungsorgans (112) der Separiervorrichtung (55) jeweils automatisch zur Wirkung bringbar ist.

25. Einrichtung nach Anspruch 24, dadurch gekennzeichnet, dass die Markierungseinrichtung (225) eine Strahlungsquelle (230) und mindestens eine mittels derselben durchstrahlbare Markierungsmaske (229) aufweist zwecks Erzeugung von photographischen Markierungen auf dem jeweils untersten Blatt des Stapels.

26. Einrichtung nach den Ansprüchen 11 und 24, dadurch gekennzeichnet, dass die Antriebsvorrichtung (130-146) zum Betätigen des Vereinzelungsorgans (112) bei jedem Trenn- und Ausgabevorgang dem Vereinzelungsorgan (112) zunächst eine das notwendige Mass für den Trennvorgang übersteigende Deplazierung und anschliessend eine kleinere Zurückbewegung verleihen zum Zwecke, jedes Spiel zwischen derjenigen Schnittkante des Blattes, längs welcher die Markierungen anzubringen sind, und der benachbarten Begrenzung der Durchbrechung (113) des Vereinzelungsorgans zu eliminieren.

27. Einrichtung nach Anspruch 15, dadurch gekennzeichnet, dass an der Aussenfläche (317) des Gehäuses (50), an welcher die Lichtschutzschieber (70, 91, 116, 57) betätigbar sind, zwischen den Lichtschutzschiebern (91, 116) der Separiervorrichtung (55) eine in Richtung der Breitenabmessung der Lichtschutzschieber verlaufende erste Reihe von Emulsionsdatenfeldern (322) und mindestens ein entlang dieser Reihe verstellbarer Indexierläufer (323) angeordnet sind, so dass der Indexierläufer (323) in bezug auf ein beliebiges der Emulsionsdatenfelder (322) ausrichtbar ist, um die betreffenden Emulsionsdaten festzuhalten und visuell anzuzeigen, dass die Lichtschutzschieber (70, 57) des Containers (51) und der Kassette (53) je mit einer über die Breite des betreffenden Lichtschutzschiebers verlaufenden Griffleiste (318 bzw. 319) versehen sind, an welcher eine gleichartige zweite bzw. dritte Reihe von Emulsionsdatenfeldern (327 bzw. 330) vorhanden ist, und dass der Indexierläufer (323) zwei Zeigervorrichtungen (328, 326) aufweist, die mit der zweiten bzw. dritten Reihe von Emulsionsdatenfeldern (327 bzw. 330) zusammenarbeiten, derart dass bei geschlossenen Lichtschutzschiebern und bei jeder Einstellung des Indexläufers (323) in bezug auf eines der Emulsionsdatenfelder (322) der ersten Reihe die Zeigervorrichtungen (328, 326) auf die entsprechenden Emulsionsdatenfelder (327, 330) der an den Griffleisten (318, 319) angebrachten zweiten und dritten Reihe von Emulsionsdatenfeldern hinweisen.

28. Einrichtung nach Anspruch 27, dadurch gekennzeichnet, dass die Lichtschutzschieber (91, 116) der Separiervorrichtung (55) ebenfalls je mit einer über die Breite des betreffenden Lichtschutzschiebers verlaufenden Griffleiste (320 bzw. 321) versehen sind, welche eine Reihe von Hilfsmarkierungen (329 bzw. 331) trägt, die be-

19

züglich der Emulsionsdatenfelder (327 bzw. 330) der Griffleiste (318) des Lichtschutzschiebers (70) des Containers (51) bzw. der Griffleiste (319) des Lichtschutzschiebers (57) der Kassette (53) ausgerichtet sind, derart dass die Hilfsmarkierungen (329, 331) die Zwischenräume zwischen den Zeigervorrichtungen (328, 326) des Indexierläufers (323) und den anvisierten Emulsionsdatenfeldern (327, 330) an den Griffleisten (318, 319) der Lichtschutzschieber (70, 57) des Containers (51) und der Kassette (53) visuell überbrücken.

29. Einrichtung nach Anspruch 27 oder 28, dadurch gekennzeichnet, dass an der Griffleiste (319) des Lichtschutzschiebers (57) der Kassette (53) ein entlang der dortigen Reihe von Emulsionsdatenfeldern (330) verstellbarer Markierungsläufer (332) angeordnet ist, so dass der Markierungsläufer (332) auf ein beliebiges der genannten Emulsionsdatenfelder (330) ausrichtbar ist, um die betreffenden Emulsionsdaten festzuhalten und visuell anzuzeigen.

## Claims

1. Apparatus for handling light-sensitive photographic sheet material in ambient light, comprising a separating device for separating individual sheets from a stack comprising a plurality of sheets of the same shape and size, and for transferring the separated sheets into a cassette intended for mounting on a photographic camera, or into a feed inlet of a developing apparatus, wherewith the separating device has an entrance opening for feeding sheet material and a delivery opening for delivering each individual sheet, and is provided with a movable separating organ for separating individual sheets from stack, said separating organ being disposed between said entrance opening and said delivery opening, and the separating device also is provided with connecting means which allow the delivery opening of the separating device to be joined to the cassette or to a connecting piece on the feed inlet of the developing apparatus, said joining being releasable and being protected against ambient light; characterized in that the separating device (55) has an accumulation space (90) for a stack of the sheet material, between the entrance opening of said separating device and the separating organ (112); further in that the entrance opening of the accumulating space (90) of the separating device (55) is provided with a closure organ (91) which is movable into a closed position which closes off the entrance opening in light-tight fashion, and into an open position which completely exposes the entrance opening; further in that support surfaces (150, 151) for supporting edge portions of the instantaneously bottommost sheet of the stack are provided at the separating organ (112) of the separating device (55); further in that the separating device (55) comprises hold-down organs (155) which extend into the accumulation space (90), for pressing the stack against the support surfaces (150, 151); further in that each of the hold-down organs (155) is movable from its pressing position into an inactive position in which it is disposed outside the accumulation space (90), in order to enable the stack to be inserted into the accumulation space; and in that drive means (157-174) are provided to move the hold-down organs (155) into their respective pressure positions and into their respective inactive positions, which drive means are controllable by the closure organ (91) associated with the entrance opening of the accumulation space (90), such that each of the hold-down organs (155) is automatically brought into its inactive position when the closure organ (91) is moved into its open position, and when the closure organ (91) is moved into its closed position each said hold-down organ is automatically moved into its pressure position.

2. Apparatus according to claim 1, characterized in that the entrance opening, the cross section of the accumulation space (90), and the delivery opening (125), of the separating device (55) are all adjusted in shape and size to the main surface dimensions of an individual sheet of the stack, and the sheet material is movable under the action of gravity through the separating device, from the entrance opening of the accumulation space (90) to the delivery opening (125), in a direction of such movement which forms an angle in the range of 30-90 degrees, preferably 75-90 degrees, with the plane of the individual sheets.

3. Apparatus according to claim 1 or 2, characterized in that the separating device (55) comprises at least one control lever (182) swingable around an axle (157), wherewith one free end of the control lever (182) serves as a spring-loaded (184) feeler finger (183) intended to rest against the instantaneously topmost sheet of the stack resting in the accumulation space (90) and to sense the height of the stack or the absence of any sheets in the accumulation space; and further in that at least one locking organ (190) is present which is movable into and out of an active position of said locking organ, which locking organ (190) when in its active position serves to lock the closure organ (91) associated with the entrance opening of the accumulation space (90) in its closed position, and which locking organ (190) can be moved out of its active position by means of the control lever (182) in order to enable the closure organ (91) at the entrance opening of the accumulation space (90) to be opened, when the feeler finger (183) determines that there are no sheets in the accumulation space (90).

4. Apparatus according to claim 3, characterized in that the locking organ (190) is movable into its active position under the action of gravity, when the closure organ (91) associated with the entrance opening of the accumulation space (90) is in its closed position and the separating device (55) is oriented in space such that the accumulation space (90) is disposed above the delivery opening (125); and in that when the separating device (55) is oppositely oriented in space to its orientation when the said accumulation space is disposed above said delivery opening, the locking organ (190) is movable out of its active position under the action of gravity, in order to enable to be opened the closure organ (91) associated with the entrance opening of the accumulation space (90), for the purpose of removing the entire stack from the accumulation space (90) of the separating device.

5. Apparatus according to one of claims 1 to 4, characterized in that at least one container (51) for a stack of the photographic sheet material is present which has a light-tight closed, but openable, cavity (52) adjusted in shape and size to the main surface dimensions of an individual sheet of the stack; and further in that connecting means (50) are present which allow the container (51) to be connected to the separating device (55) in a releasable and light-tight manner, such that the cavity (52) of the container (51) matchingly communicates with the entrance opening of the accumulation space (90) of the separating device (55), in order to enable passage of sheet material from the container (51) into the accumulation space (90) of the separating device.

6. Apparatus according to claim 5, characterized in that the closure organ at the entrance opening of the accumulation space (90) of the separating device (55) is a light protection slide (91), and that a locking organ (99) is provided which locks said slide (91) whenever the latter is in its closed position, said locking being effected as long as the container (51) is not in installed position adjacent to the said entrance opening of the accumulation space (90).

7. Apparatus according to claim 6, characterized in that the cavity (52) of container (51) is also provided with a light protection slide (70), which is movable into a closed position which closes off cavity (52) in light-tight fashion, and into an open position which completely exposes cavity (52); and in that the two light protection slides (91 and 70) associated with the entrance opening of the accumulation space (90) of the separating device (55) and with the cavity (52) of the container (51) comprise coupling organs (92-95) which are mutually adapted to engage each other and which automatically come into coupling engagement each time the container (51) is coupled to the separating device (55), so that then the said two light protection slides (91 and 70) cannot but be moved simultaneously and in the same direction.

8. Apparatus according to one of claims 1 to 7, characterized in that a light protection slide (116) is associated with the delivery opening (125) of the separating device (55), which slide (116) is movable into a closed position which closes off said delivery opening (125) in light-tight fashion, and into an open position which completely exposes said delivery opening (125); and in that drive means (130-146) are provided to manipulate the separating organ (112) for single sheets, which organ (112) is a component of the separating device (55), which drive means are controllable via the light protection slide (116) associated with the delivery opening (125), the control being such that each time said light protection slide (116) is opened it causes the separating organ (112) for single sheets to be actuated to deliver a single sheet of the sheet material, and each time the said light protection slide (116) is closed it causes the said separating organ (112) to be moved back to its initial position.

9. Apparatus according to claim 8, characterized in that a locking organ (210) is provided which locks the light protection slide (116) associated with the delivery opening (125) of the separating device (55) in its closed position whenever and as long as no cassette (53) or no connecting piece of a developing apparatus is joined to the delivery opening (125).

10. Apparatus according to claim 8 or 9, characterized in that a cavity (56) of cassette (53) or a pass-through opening of the connecting piece of the developing apparatus is adjusted in shape and size to the main surface dimensions of an individual sheet of the sheet material and is provided with a light protection slide (57) which is movable into a closed position whereby the cavity (56) or the pass-through opening is closed off in light-tight fashion, and into an open position whereby the cavity (56) or the pass-through opening is completely exposed; and in that the two light protection slides (116, 57) associated with the delivery opening (125) of the separating device (55) and the cavity (56) of the cassette (53), respectively, or associated with the said delivery opening and the pass-through opening of the connecting piece, have coupling organs which are mutually adapted to engage each other, which organs come into coupling engagement with each other each time the cassette (53) or the connecting piece is joined to the delivery opening (125) of the separating device (55), so that then the said two light protection slides (116, 57) cannot but be moved simultaneously and in the same direction.

11. Apparatus according to one of claims 8 to 10, characterized in that the separating organ (112) for single sheets is a flat disc having thickness approximately the same as the tickness of a single sheet of the stack and having a perforation (115) for receiving and accommodating the instantaneously bottommost sheet which is to be separated from the stack, which separating organ (112) is displaceable in order to separate the bottommost sheet from the stack and to transfer said sheet thus separated into the delivery opening (125) of the separating device (55); further in that the perforation (115) of the separating organ (112) generally matches, in shape and size, the accumulation space (90) of the separating device (55), considered in the pass-through direction; and in that the light protection slide (116) associated with the delivery opening (125) of the separating device (55) is slidably mounted immediately adjacent to the lower side of the separating organ (112), which side faces away from the accumulation space (90), and in its closed position completely closes off both the delivery opening (125) and the perforation (115) of the separating organ (112), in light-tight fashion, and at the same time said slide (116) forms a support for the instantaneously bottommost sheet of the stack disposed in the accumulation space (90).

12. Apparatus according to claims 3 and 8, characterized in that the control lever (182) having the feeler finger (183) is also provided with a locking dog (183) which comes into engagement with a detent (194) on light protection slide (116) associated with the delivery opening (125) whenever there are no sheets in the accumulation space (90) of the separating device (55) and when said slide (116) occupies its closed position, whereby said slide (116) is locked in its closed position by means of the locking dog (183) and the detent (194).

13. Apparatus according to claims 6 and 8, characterized in that a back-sliding-prevention organ (105; 201) is associated with a least one of the two light protection slides (91, 116) of the separating device (55), which prevention organ prevents the respective light protection slide (91; 116) from reversing its direction of movement when said slide (91; 116) is being opened or closed, as long as said slide is not completely moved into its open or closed position.

14. Apparatus according to claim 8 or 9, characterized in that a locking organ (210) is associated with the light protection slide (116) of the delivery opening (125) of the separating device (55), which locking organ (210) is placed under the action of a control member (214) which is actuatable by a cassette (53) when the latter is joined to the delivery opening (125) of the separating device (55), such that after completion of a single opening and closing cycle of the light protection slide (116) associated with the delivery opening (125) the locking organ (210) locks the slide (116) of the delivery opening (125) in its closed position until the cassette (53) is removed from the separating device (55) and replaced by another cassette.

15. Apparatus according to claims 7 and 10, characterized in that the separating device (55) is integrated into a housing (50), into one exterior side of which the container (51) and the cassette (53) are both slidable in the manner of drawers; and in that the light protection slides (91, 116) of the separating device (55) and the light protection slides (70, 57) of the container (51) and the cassette (53), respectively, are manipulable from the said exterior side of the housing (50).

16. Apparatus according to claim 15, characterized in that the housing (50) is composed of a plurality of housing component structures (A, B, C) which are assembled sandwich-like in superposed layers.

17. Apparatus according to one of claims 1 to 16, characterized in that the interior boundary surfaces of the accumulation space (90) and/or of the entrance opening and/or of the delivery opening (125) of the separating device (55) are provided with grooves (90A) which run generally in the direction of fall of the sheets of the stack.

18. Apparatus according to one of claims 5 to 17, characterized in that a combining piece (250; 300) is provided which enables interconnection, in sandwich-like and light-tight fashion, of a cassette (53) separated from the delivery opening (125) of the separating device (55) with a container (51) separated from the entrance opening of the accumulation space (90) of the separation device (55), or with a connecting piece (291) on the feed inlet of a developing apparatus, said interconnection thus enabled being such that the cavity (56) of the cassette (53) and the cavity (52) of the container (51) or a pass-through opening of the connecting piece (291) face each other and match each other in their dimensions transverse to the pass-through direction; and further in that the combining piece (250) has an opening (253, 254; 253, 301) extending through it in the pass-through direction, which is basically adapted in shape and size in its dimensions transverse to the pass-through direction to the free opening of the cavity (56) of the cassette (53), so that a sheet from the cassette (53) can be transferred under the action of gravity through said opening of the combining piece into the container (51) or into the connecting piece (291), respectively.

19. Apparatus according to claim 18, characterized in that the cavity (56) of the cassette (53) and the cavity of the container (51), or the said cavity (56) and the pass-through opening of the connecting piece (291) are each provided with a light protection slide (57, 70), respectively, which slide is movable into a closed position whereby the respective cavity or the pass-through opening is closed off in light-tight fashion, and into an open position whereby the respective cavity or the pass-through opening is completely exposed; and in that coupling organs (271, 272, 119, etc.) are present by means of which the light protection slide (57) of the cassette (53) is automatically couplable to the light protection slide (70) of the container (51) or of the connecting piece, when the cassette and the container, or the cassette and the connecting piece, are joined to the combining piece (250; 300), so that then the said two coupled light protection slides (57, 70) cannot but be moved simultaneously and in the same direction.

20. Apparatus according to claim 18, characterized in that the cavities (56, 52) of the cassette (53) and of the container (51), as well as the pass-through opening (253, 254; 253, 301) of the combining piece (250; 300), and possibly also the connecting piece (291) are each provided with a light protection slide (57, 70, 270, 302), which slide is movable into a closed position whereby the respective cavity or pass-through opening is closed off in light-tight fashion, and into an open position whereby the respective cavity or pass-through opening is completely exposed; and in that coupling organs (94, 95, 58, 119, 271-273; 58, 119, 303, 304) are present, by means of which the light protection slide (270, 302) of the pass-through opening of the combining piece (250; 300) is automatically couplable to the light protection slide (57) of the cassette (53) as well as possibly to the light protection slide (70) of the container (51) or possibly to the light protection slide of the connecting piece, when the cassette (53) as well as possibly the container or possibly the connecting piece are connected to the combining piece (250; 300), so that then the said two coupled light protection slides cannot but be moved simultaneously and in the same direction.

21. Apparatus according to claim 20, characterized in that at least one back-sliding prevention organ (275) is associated with the light protection slide (270; 302) of the pass-through opening (253, 254; 253, 301) of the combining piece (250; 300), which prevention organ prevents the light protection slide from reversing its direction of movement when said slide (91; 116) is being opened or closed, as long as said slide is not completely moved into its open or closed position.

22. Apparatus according to one of claims 18 to 21, characterized in that the combining piece (250; 300) is a housing into which the cassette (53) and possibly the container (51) are slidable in the manner of drawers.

23. Apparatus according to claims 15 and 18, characterized in that the combining piece is a part of the housing containing the separating device, and the latter is of such a configuration that the container (51) and the cassette (53) are slidable into it in the manner of drawers, wherewith the cassette comes to lie above the container.

24. Apparatus according to one of claims 1 to 23, characterized in that the separating device (55) is provided with at least one labeling arrangement (225) for applying labels onto at least one border region of the instantaneously bottommost sheet of the stack lying in the accumulation space (90) of the separating device (55), wherewith the labeling arrangement is automatically actuatable by the separating organ (112) for single sheets, which organ (112) is a component of the separating device (55), each time said separating organ (112) is actuated.

25. Apparatus according to claim 24, characterized in that the labeling arrangement (225) comprises a radiation source (230) and a least one labeling mask (229) which is penetrable by the generated radiation to produce photographic labels on the instantaneously bottommost sheet of the stack.

26. Apparatus according to claims 11 and 24, characterized in that the drive means (130-146) for actuating the separating organ (112) for single sheets, which organ (112) is a component of the separating device (55), for each separation and delivery operation of the separating organ (112) first undergo an excursion which exceeds that required for the separation and then execute a smaller reverse movement, for the purpose of eliminating any play between a cut edge of the sheet, along which edge the labeling is to be applied, and the neighbouring boundary of the perforation (115) of the separating organ (112).

27. Apparatus according to claim 15, characterized in that the exterior surface (317) of the housing (50), at which surface the light protection slides (70, 91, 116, 57) are manipulable, is provided with a first row of emulsion data fields (322) being disposed between the light protection slides (91, 116) of the separating device (55) and extending in the direction of the breadth dimension of the light protection slides and further provided with at least one indexing slide (323) adjustable along said row of emulsion data fields, wherewith the indexing slide (323) can be lined up with any given emulsion data field (322) in order to record and visually indicate the relevant emulsion data; further in that the light protection slides (70, 57) of the container (51) and of the cassette (53) are each provided with a strip shaped handle (318; 319) extending over the width of the said light protection slide, which handle bears a similar second or third row of emulsion data fields (327 or 330); and in that the indexing slide (323) has two indicating devices (328, 326) each of which cooperates with the second or third row of emulsion data fields (327 or 330), such that, when the light protection slides are closed, for each setting of the indexing slide (323) with respect to one of the emulsion data fields (322) of the first row the indicating devices (328, 326) indicate the corresponding emulsion data fields (327, 330) of the second and third rows of emulsion data fields applied on the strip-shaped handles (318, 319), respectively.

28. Apparatus according to claim 27, characterized in that the light protection slides (91, 116) of the separating device (55) are also each provided with a strip-shaped handle (320, 321) extending over the width of the said light protection slide, which handle bears a row of auxiliary markings (329 or 331) which are aligned with the emulsion data fields (327 or 330) of the strip-shaped handle (318) of the light protection slide (70) of the container (51) and of the strip-shaped handle (319) of the light protection slide (57) of the cassette (53), such that the auxiliary markings (329, 331) serve to visually bridge the intermediate spaces between the indicating devices (328, 326) of the indexing slide (323) and the targeted emulsion data fields (327, 330) on the strip-shaped handles (318, 319) of the light protection slides (70, 57) of the container (51) and of the cassette (53), respectively.

29. Apparatus according to claim 27 or 28, characterized in that a marking slide (332) is disposed on the strip-shaped handle (319) of the light protection slide (57) of the cassette (53), which marking slide (332) is adjustable along the row of emulsion data fields (330) present on said strip-shaped handle (319), wherewith said marking slide (332) can be aligned with any given one of said emulsion data fields (330) in order to record and visually indicate said field (330).

## Revendications

1. Dispositif pour la manipulation de feuilles photographiques sensibles à la lumière dans la lumière du jour avec un dispositif de séparation pour séparer chacune des feuilles d'une pile constituée de plusieurs feuilles de mêmes forme et dimensions et pour transférer la feuille séparée dans une cassette destinée au montage dans une caméra photographique ou dans un dispositif d'alimentation d'un appareil de développement photographique, le dispositif de séparation comportant un orifice d'entrée pour l'introduction des feuilles et un orifice de sortie pour extraire chacune des feuilles, tandis qu'un organe d'individualisation mobile est disposé entre l'orifice d'entrée et l'orifice de sortie et que des dispositifs de jonction sont prévus pour permettre de connecter l'orifice de sortie du dispositif de séparation à la cassette ou à une pièce de raccordement du dispositif d'alimentation de l'appareil de développement de manière amovible et avec protection contre la lumière du jour, caractérisé en ce que le dispositif de séparation (55) présente, entre son orifice d'entrée et l'organe d'individualisation (112) une capacité de retenue (90) pour une pile de feuilles, en ce que l'orifice d'entrée de la capacité de retenue (90) du dispositif de séparation (55) est pourvu d'un organe de fermeture (91) qui peut se déplacer dans une position de fermeture fermant l'orifice d'entrée en arrêtant la lumière, ou bien dans une position d'ouverture dégageant entièrement l'orifice d'entrée, en ce que l'organe d'individualisation (112) du dispositif de séparation (55) présente des surfaces de support (150, 151) pour supporter les parties périphériques de la feuille inférieure de la pile, en ce que le dispositif de séparation (55) présente, dans la capacité de retenue (90) des organes de retenue (155) qui y pénètrent, destinés à appuyer sur la pile par les surfaces de maintien (150, 151), en ce que chacun des organes de maintien (155) peut se déplacer de sa position de pression jusqu'à une position de non-fonctionnement, pour laquelle il se trouve en dehors de la capacité de retenue (90), afin de permettre l'insertion de la pile dans la capacité de retenue et en ce que, pour déplacer les organes de maintien (155) vers leur position de pression ou vers leur position de non-fonctionnement, il existe des dispositifs de commande (157, 174) qui peuvent être commandés par l'organe de fermeture (91) correspondant à l'orifice d'entrée de la capacité de retenue (90), de façon que les organes de maintien (155) prennent automatiquement leur position de non-fonctionnement lorsque l'organe de fermeture (91) est en position d'ouverture et prennent automatiquement leur position de pression quand l'organe de fermeture (91) se met en position de fermeture.

2. Dispositif selon la revendication 1, caractérisé en ce que l'orifice d'entrée, la section de la capacité de retenue (90) et l'orifice de sortie (125) du dispositif de séparation (55) sont adaptés à la forme et à la grandeur des dimensions superficielles d'une feuille de la pile et que les feuilles peuvent se déplacer sous l'effet de la force de la pesanteur depuis l'orifice d'entrée de la capacité de retenue (90) vers l'orifice de sortie (125), en traversant le dispositif de séparation (55) dans une direction qui forme, avec le plan de chaque feuille, un angle compris entre 30 et 90° et, de préférence, compris entre 75 et 90°.

3. Dispositif selon la revendication 1 ou 2, caractérisé en ce que le dispositif de séparation (55) comprend au moins un levier de commande (182) pouvant pivoter autour d'un axe (157) et pourvu d'une extrémité libre en forme de palpeur (183) destiné à appuyer, sous l'effet d'un ressort (184), sur la feuille supérieure de la pile située dans la capacité de retenue (90) et à détecter la hauteur de la pile tout comme l'absence d'une feuille dans la capacité de retenue, en ce qu'au moins un organe de verrouillage (190) pouvant se mettre en position de fonctionnement et en position de non-fonctionnement est prévu qui, en position de non-fonctionnement, bloque en position de fermeture l'organe de fermeture (91) correspondant à l'orifice d'entrée de la capacité de retenue (90) et qui peut être amené en dehors de sa position de fonctionnement au moyen du levier de commande (182), afin de permettre l'ouverture de l'organe de fermeture (91), à l'orifice d'entrée de la capacité de retenue (90) lorsque le palpeur (183) constate l'absence d'une feuille dans la capacité de retenue (90).

4. Dispositif selon la revendication 3, caractérisé en ce que l'organe de verrouillage (190) peut se mettre en position de fonctionnement sous l'effet de la force de la pesanteur lorsque l'organe de fermeture (91) correspondant à l'orifice d'entrée de la capacité de retenue (90) se trouve en position de fermeture et que le dispositif de séparation est orienté dans l'espace de façon que la capacité de retenue (90) soit située au-dessus de l'orifice de sortie (125) et en ce que, en cas d'orientation inverse du dispositif de séparation (55) dans l'espace, l'organe de verrouillage (91) peut se mettre en dehors de sa position de fonctionnement sous l'effet de la force de la pesanteur, afin de permettre l'ouverture de l'organe de fermeture (91) à l'orifice d'entrée de la capacité de retenue (90), afin de pouvoir retirer toute la pile de la capacité de retenue (90) du dispositif de séparation.

5. Dispositif selon l'une des revendications 1 à 4, caractérisé en ce qu'il existe au moins un conteneur (51) pour une pile de feuilles photographiques qui présente une cavité (52) fermée de façon à empêcher le passage de la lumière mais pouvant être ouverte, qui peut s'adapter à la forme et à la dimension des dimensions superficielles d'une feuille de la pile, en ce qu'il existe des dispositifs de connexion (50) qui permettent de connecter, de manière amovible et sans laisser passer la lumière, le conteneur (51) et le dispositif de séparation (55), en ce que la cavité (52) du conteneur (51) communique de manière appropriée avec l'orifice d'entrée de la capacité de retenue (90) du dispositif de séparation (55), afin de permettre le passage des feuilles du conteneur (51) vers la capacité de retenue (90) du dispositif de séparation.

6. Dispositif selon la revendication 5, caractérisé en ce que l'organe de fermeture est un tiroir de protection contre la lumière (91) disposé à l'orifice d'entrée de la capacité de retenue (90) du dispositif de séparation (55) et en ce qu'il existe un organe de verrouillage (99) qui bloque ce tiroir de protection contre la lumière (91) dans sa position de fermeture aussi longtemps que le conteneur (51) n'est pas raccordé à l'orifice d'entrée de la capacité de retenue (90).

7. Dispositif selon la revendication 6, caractérisé en ce que la cavité (52) du conteneur (51) est également pourvue d'un tiroir de protection contre la lumière (70), qui peut se déplacer dans une position de fermeture fermant, de manière à arrêter la lumière, la cavité (52) et dans une position d'ouverture dégageant complètement la cavité (52) et en ce que les deux tiroirs de protection contre la lumière (91, 70) correspondant à l'orifice d'entrée de la capacité de retenue (90) du dispositif de séparation (55) et à la cavité (52) du conteneur (51) présentent des organes d'accouplement (92, 95) adaptés l'un à l'autre, qui se mettent automatiquement en position de couplage lorsque le conteneur (51) est connecté au dispositif de séparation (55) de façon que les deux tiroirs de protection contre la lumière précités (91, 70) doivent être obligatoirement manœuvrés de manière simultanée et dans le même sens.

8. Dispositif selon l'une des revendications 1 à 7, caractérisé en ce que, à l'orifice de sortie (125) du dispositif de séparation (55), correspond un tiroir de protection contre la lumière (116) qui peut se déplacer dans une position de fermeture fermant, de manière à arrêter la lumière, l'orifice de sortie (125) et, dans une position d'ouverture dégageant complètement l'orifice de sortie, et en ce que, pour actionner l'organe d'individualisation (112) du dispositif de séparation (55), il existe des dispositifs de commande (130, 146) qui peuvent être actionnés par le tiroir de protection contre la lumière (116) correspondant à l'orifice de sortie (125), de façon que l'ouverture du tiroir de protection contre la lumière précité (116) provoque l'actionnement de l'organe d'individualisation (112), afin de faire sortir une feuille, tandis que la fermeture du tiroir de protection contre la lumière (116) provoque le retour de l'organe d'individualisation (112) à sa position initiale.

9. Dispositif selon la revendication 8, caractérisé en ce qu'il existe un organe de verrouillage (210) qui bloque le tiroir de protection contre la lumière (116) correspondant à l'orifice de sortie (125) du dispositif de séparation (55) aussi longtemps qu'une cassette (53) ou, éventuellement, la pièce de raccordement d'un dispositif de développement n'ont pas été raccordés à l'orifice de sortie (125).

10. Dispositif selon la revendication 8 ou 9, caractérisé en ce qu'une cavité (56) de la cassette (53) ou un orifice de passage de la pièce de raccordement du dispositif de développement présentent une forme et des dimensions adaptées aux dimensions superficielles de chaque feuille et sont pourvus d'un tiroir de protection contre la lumière (57) qui peut se déplacer dans une position de fermeture fermant, de manière à arrêter la lumière, la cavité (56) ou l'orifice de passage et dans une position d'ouverture dégageant complètement la cavité (56) ou l'orifice de passage, et en ce que les deux tiroirs de protection contre la lumière (116, 57) correspondant à l'orifice de sortie (125) du dispositif de séparation (55) et à la cavité (56) de la cassette (53) ou de l'orifice de passage de la pièce de raccordement présentent des organes d'accouplement adaptés l'un à l'autre (58, 117-119) qui se mettent automatiquement en position de couplage mutuel lorsque la cassette (53) ou la pièce de raccordement est raccordée à l'orifice de sortie (125) du dispositif de séparation (55), de façon que les deux tiroirs de protection contre la lumière (116, 57) précités soient nécessairement actionnés de manière simultanée et dans le même sens.

11. Dispositif selon l'une des revendications 8 à 10, caractérisé en ce que l'organe d'individualisation (112) du dispositif de séparation (55) est un disque plat dont l'épaisseur est à peu près égale à l'épaisseur d'une seule feuille de la pile et qui présente un passage (115) destiné à recevoir la feuille inférieure séparée de la pile et qui peut se déplacer par rapport à la capacité de retenue (90) afin de séparer la feuille inférieure de la pile et de transférer la feuille séparée dans l'orifice de sortie (125) du dispositif de séparation, en ce que le passage (115) de l'organe d'individualisation (112) et la capacité de retenue (90) du dispositif de séparation (55) correspondent essentiellement l'un à l'autre par leur forme et leurs dimentions quand on les considère dans la direction de passage, et en ce que le tiroir de protection contre la lumière (116) correspondant à l'orifice de sortie (125) du dispositif de séparation (55) est monté à glissement, directement sur la face inférieure de l'organe d'individualisation (112) opposé à la capacité de retenue (90) et ferme complètement, et en arrêtant la lumière dans sa position de fermeture, non seulement l'orifice de sortie (125) mais également le passage (115) de l'organe d'individualisation (112) et constitue simultanément un support pour la feuille inférieure de la pile qui se trouve dans la capacité de retenue (90).

12. Dispositif selon l'une des revendications 3 et 8, caractérisé en ce que le levier de commande (182) présentant un palpeur (183) est pourvu d'une came de blocage (183) qui, lorsqu'il n'y a plus de feuilles dans la capacité de retenue (90) du dispositif de séparation (55), vient au contact d'une butée (194) sur le tiroir de protection contre la lumière (116) correspondant à l'orifice de sortie (125) lorsque ce tiroir de protection contre la lumière (116) prend sa position de fermeture, si bien que la came de blocage (183) et la butée (194) bloquent le tiroir de protection contre la lumière (116) dans sa position de fermeture.

13. Dispositif selon les revendications 6 et 8, caractérisé en ce qu'au moins l'un des deux tiroirs de protection contre la lumière (91, 116) du dispositif de séparation (55) possède un organe de blocage anti-retour (105, 201) qui empêche l'inversion du mouvement du tiroir de protection contre la lumière concerné (91, 116) tant à l'ouverture qu'à la fermeture de celui-ci, aussi longtemps que le tiroir de protection contre la lumière ne s'est pas complètement déplacé jusqu'à sa position d'ouverture ou à sa position de fermeture.

14. Dispositif selon la revendication 8 ou 9, caractérisé en ce que le tiroir de protection contre la lumière (116) de l'orifice de sortie (125) du dispositif de séparation (55) est pourvu d'un organe de verrouillage (210) qui est commandé par un organe de commande (214) qui peut être actionné par une cassette (53) connectée à l'orifice de sortie (125) du dispositif de séparation (55), de façon que, après une seule ouverture et fermeture du tiroir de protection contre la lumière (116) correspondant à l'orifice de sortie (125), l'organe de verrouillage (210) bloque en position de fermeture le tiroir de protection contre la lumière (116) de l'orifice de sortie (125) jusqu'à ce que la cassette (53) soit séparée du dispositif de séparation (55) et qu'une autre cassette soit raccordée.

15. Dispositif selon les revendications 7 et 10, caractérisé en ce que le dispositif de séparation (55) est intégré dans un boîtier (50), dans lequel peuvent être insérés le conteneur (51) et la cassette (53) à la manière de tiroirs et sur la même face extérieure du boîtier, et en ce que tant les tiroirs de protection contre la lumière (91, 116) du dispositif de séparation (5) que les tiroirs de protection contre la lumière (70, 57) du conteneur (51) et de la cassette (53) peuvent être actionnés depuis ladite face extérieure du boîtier (50).

16. Dispositif selon la revendication 15, caractérisé en ce que le boîtier (50) est constitué de plusieurs éléments de boîtiers (A, B, C) superposés en sandwich.

17. Dispositif selon l'une des revendications 1 à 16, caractérisé en ce que les surfaces de limitation intérieures de la capacité de retenue (90) et/ou de l'orifice d'entrée et/ou de l'orifice de sortie (125) du dispositif de séparation (55) sont pourvues de rainures (90A), qui sont disposées essentiellement suivant la direction de chute des feuilles de la pile.

18. Dispositif selon l'une des revendications 5 à 17, caractérisé en ce qu'il existe une pièce de jonction (250; 300) au moyen de laquelle une cassette (53) séparée de l'orifice de sortie (125) du dispositif de séparation (55) et un conteneur (51) séparé de l'orifice d'entrée de la capacité de retenue (90) du dispositif de séparation, ou une pièce de raccordement (291) d'un dispositif de développement peuvent être connectés les uns aux autres en sandwich et de manière à ne pas laisser passer la lumière, de façon que les cavités (56, 52) de la cassette (53) et du conteneur (51) ou un orifice de passage de la pièce de raccordement (291) sont tournés les uns vers les autres et correspondent mutuellement les uns aux autres, et en ce que la pièce de jonction (250) présente un passage (253, 254; 253, 301) correspondant essentiellement par sa forme et ses dimensions au débouché de la cavité (56) de la cassette (53), ledit passage permettant de transmettre une feuille provenant de la cassette (53) dans le conteneur (51) ou dans la pièce de raccordement (291) sous l'effet de la force de la pesanteur.

19. Dispositif selon la revendication 18, caractérisé en ce que la cavité (56) de la cassette (53) et la cavité (52) du conteneur (51) ou l'orifice de passage de la pièce de raccordement (291) sont pourvus chacun d'un tiroir de protection contre la lumière (57, 70) qui peut se déplacer dans une position de fermeture fermant la cavité ou l'orifice de passage concerné, de façon à empêcher le passage de la lumière et dans une position d'ouverture dégageant complètement la cavité ou l'orifice de passage, et en ce qu'il existe des organes d'accouplement permettant de coupler automatiquement les uns aux autres les tiroirs de protection contre la lumière (57, 70) de la cassette (53) et du conteneur (51) ou de la pièce de raccordement lorsque la cassette et le conteneur ou la pièce de raccordement sont connectés à la pièce de jonction (250; 300), si bien que les tiroirs de protection contre la lumière accouplés (57, 70) doivent alors nécessairement être actionnés de manière simultanée et dans le même sens.

20. Dispositif selon la revendication 8, caractérisé en ce que les cavités (56, 52) de la cassette (53) et du conteneur (51) tout comme également l'orifice de passage (253, 254; 253, 301) de la pièce de jonction (250; 300) et, éventuellement, de la pièce de raccordement (291) sont pourvus chacun d'un tiroir de protection contre la lumière (57, 70, 270, 302) qui peut se déplacer dans une position de fermeture fermant la cavité ou l'orifice de passage concerné, de façon à empêcher le passage de la lumière et dans une position d'ouverture dégageant complètement la cavité ou l'orifice de passage concerné et en ce qu'il existe des organes d'accouplement (94, 95, 58, 119, 271-273; 58, 119, 303, 304) au moyen desquels le tiroir de protection contre la lumière (270, 302) de l'orifice de passage de la pièce de jonction (250; 300) peut être automatiquement accouplé au tiroir de protection contre la lumière (57) de la cassette (53) et, éventuellement, au tiroir de protection contre la lumière (70) du conteneur (51) ou de la pièce de raccordement lorsque la cassette (53) et, éventuellement, le conteneur ou la pièce de raccordement sont connectés à la pièce de jonction (250; 300) si bien que les tiroirs de protection contre la lumière ainsi accouplés doivent être obligatoirement manœuvrés de manière simultanée et dans le même sens.

21. Dispositif selon la revendication 20, caractérisé en ce que le tiroir de protection contre la lumière (270, 302) de l'orifice de passage (253, 254; 253, 301) de la pièce de jonction (250; 300) comprend au moins un organe de blocage empêchant le retour en arrière (275), qui met obstacle à l'inversion du mouvement du tiroir de protection contre la lumière tant à l'ouverture qu'à la fermeture de celui-ci aussi longtemps que le tiroir de protection contre la lumière ne s'est pas complètement déplacé jusqu'à sa position d'ouverture ou à sa position de fermeture.

22. Dispositif selon l'une des revendications 18 à 21, caractérisé en ce que la pièce de jonction (250; 300) est un boîtier dans lequel on peut insérer la cassette (53) et, éventuellement, le conteneur (51) suivant la nature des tiroirs.

23. Dispositif selon les revendications 15 et 18, caractérisé en ce que la pièce de jonction est une partie du boîtier contenant le dispositif de séparation et que ce dernier est disposé de manière que le conteneur (51) et la cassette (53) puissent y être insérés à la manière de tiroirs, et cela de façon que la cassette vienne se placer au-dessus du conteneur.

24. Dispositif selon l'une des revendications 1 à 23, caractérisé en ce que le dispositif de séparation (55) est pourvu d'au moins un dispositif de marquage (225) pour apposer des marquages sur au moins une partie du bord de chaque feuille inférieure de la pile se trouvant dans la capacité de retenue (90) du dispositif de séparation (55), ledit dispositif de marquage pouvant être mis automatiquement en action lorsque l'organe d'individualisation (112) du dispositif de séparation (55) est actionné.

25. Dispositif selon la revendication 24, caractérisé en ce que le dispositif de marquage (225) présente une source de rayonnement (230) et, au moins, un masque de marquage (229) au travers duquel peut se faire l'irradiation, afin de créer des marquages photographiques sur la feuille inférieure de la pile.

26. Dispositif selon les revendications 11 et 24, caractérisé en ce que les dispositifs d'entraînement (130, 146) servant à actionner l'organe d'individualisation (112) à chaque opération de séparation et de transfert vers l'organe d'individualisation (112) effectuent tout d'abord un déplacement dépassant la mesure requise pour l'opération de séparation et, ensuite, un mouvement en sens inverse de moindre amplitude, ayant pour but d'éliminer tout jeu entre la tranche de la feuille le long de laquelle les marquages doivent être appliqués et la limite adjacente du passage (113) de l'organe d'individualisation.

27. Dispositif selon la revendication 15, caractérisé en ce que, sur la surface extérieure (317) du boîtier (50) par laquelle on peut actionner les tiroirs de protection contre la lumière (70, 91, 116, 57) et entre les tiroirs de protection contre la lumière (91, 116) du dispositif de séparation (55), il existe une première série de zones de données d'émulsion (322) disposées dans la direction de la largeur du tiroir de protection contre la lumière et au moins un curseur d'indexation (323) pouvant se déplacer le long de cette série, si bien que le curseur d'indexation (323) peut être aligné par rapport à une zone de données d'émulsion quelconque (322), afin de maintenir les données d'émulsion correspondantes et de les afficher visuellement, en ce que les tiroirs de protection contre la lumière (70, 57) du conteneur (51) et de la cassette (53) sont pourvus chacun d'une poignée (318 ou 319) disposée sur la largeur du tiroir de protection contre la lumière concerné et pourvus d'une seconde ou troisième série de zones de données d'émulsion analogues (327 ou 330) et en ce que le curseur d'indexation (323) présente deux dispositifs indicateurs (328, 326) qui coopèrent avec la seconde ou la troisième série de zones de données d'émulsion (327 ou 330), de façon que, lorsque les tiroirs de protection contre la lumière sont fermés, et pour tout réglage du curseur d'indexation (323) par rapport à une des zones de données d'émulsion (322) de la première série, les dispositifs indicateurs (328, 326) indiquent les zones de données d'émulsion correspondantes (327, 330) des seconde et troisième séries de zones de données d'émulsion ramenées aux poignées (318, 319).

28. Dispositif selon la revendication 27, caractérisé en ce que les tiroirs de protection contre la lumière (91, 116) du dispositif de séparation (55) sont également pourvus chacun d'une poignée (220 ou 221) disposée sur la largeur du tiroir de protection contre la lumière concerné, qui porte une série de marquages auxiliaires (329 ou 331) qui sont alignés par rapport aux zones de données d'émulsion (327 ou 330) de la poignée (318) du tiroir de protection contre la lumière (70) du conteneur (51) ou de la poignée (319) du tiroir de protection contre la lumière (57) de la cassette (53), de façon que les marquages auxiliaires (329, 331) surpassent visuellement les interstices entre les dispositifs indicateurs (328, 326) du curseur d'indexation (323) et des zones de données d'émulsion visées (327, 330) des poignées (318, 319) des tiroirs de protection contre la lumière (70, 57) du conteneur (51) et de la cassette (53).

29. Dispositif selon la revendication 27 ou 28, caractérisé en ce que la poignée (319) du tiroir de protection contre la lumière (57) de la cassette (53) comporte un curseur de marquage (332) pouvant se déplacer le long de la série existante de zones de données d'émulsion (330), si bien que le curseur de marquage (332) peut être aligné sur une zone de données d'émulsion précitée quelconque (330), afin de fixer les données d'émulsion correspondantes et de les afficher visuellement.

*Fig. 1*

*Fig. 2*

Fig. 3

Fig. 40

Fig. 4

50
A
51
71
94
95 93 92
55 B
117
118 58
119
53

73 74 52
90 70
91
114
112
157
125 116 115 155
56 57
59 60

Fig. 38

290
F
51
71
94
93 92
G
55
71
H

52
70
91
114
112
116 115 155

291
295
292

## Fig. 5

## Fig. 6

## Fig. 7

*Fig. 8*

# Fig. 9

Fig.10

Fig. 11

99
101
102
91

Fig. 12

91
106
105
108
110

Fig. 13

91
106
105
109

Fig. 14

106
105
109
111
91

Fig. 22

136
134
133
132
142
135
116
141
143
140
131
130
146 145 147
125
115
112
116

Fig. 15

Fig. 16

Fig. 18

Fig. 17

Fig. 20

Fig. 19

Fig. 21

Fig. 23

*Fig. 24*

Fig. 25

Fig. 27

Fig. 26

Fig. 28

Fig. 34

Fig. 29

Fig. 31

Fig. 30

Fig. 32

Fig. 33

Fig. 35

Fig. 37

Fig. 36

Fig. 39

Fig. 41

Fig. 42